# EUROPÄISCHE PATENTSCHRIFT

(11) **EP 3 567 276 B1**
(45) Veröffentlichungstag und Bekanntmachung des Hinweises auf die Patenterteilung: **28.07.2021**
(21) Anmeldenummer: 19000234.5
(22) Anmeldetag: 06.05.2019
(51) Int. Cl.: F16G 13/06

(54) **ASYMMETRISCHE FAHRRADKETTEN-INNENLASCHE, FAHRRADKETTEN-AUSSENLASCHE UND FAHRRADKETTE MIT WENIGSTENS EINER DERARTIGEN LASCHE**
ASYMMETRIC INTERNAL TAB FOR BICYCLE CHAIN, EXTERNAL TAB FOR BICYCLE CHAIN, AND BICYCLE CHAIN WITH AT LEAST ONE SUCH TAB
LANGUETTE INTÉRIEURE ASYMÉTRIQUE DE CHAÎNE DE BICYCLETTE, LANGUETTE EXTÉRIEURE DE CHAÎNE DE BICYCLETTE ET CHAÎNE DE BICYCLETTE DOTÉE D'AU MOINS UNE TELLE LANGUETTE

(30) Priorität: 11.05.2018 DE 102018207361
(43) Veröffentlichungstag der Anmeldung: 13.11.2019
(73) Patentinhaber: SRAM Deutschland GmbH, 97424 Schweinfurt (DE)
(72) Erfinder: dos Santos, Pedro Miguel Nunes, 3040-087 Coimbra (PT); da Silva, Diogo Daniel Soares, 3030-393 Coimbra (PT)

(56) Entgegenhaltungen:
- EP-A1- 3 318 335

## Beschreibung

Die vorliegende Erfindung betrifft eine Fahrradketten-Innenlasche mit zwei mit Abstand voneinander ausgebildeten, die Innenlasche in ihrer Dickenrichtung durchsetzenden Verbindungsöffnungen, welche jeweils zur Aufnahme eines Verbindungsbauteils ausgebildet sind, um die Innenlasche zur Bildung eines Innenlaschenglieds einer Fahrradkette mit einer weiteren Innenlasche zu verbinden, wobei eine Verbindungsgerade, welche jeweilige Mittelachsen der Verbindungsöffnungen verbindet, eine Längsrichtung der Innenlasche definiert und wobei eine sowohl zur Längsrichtung als auch zur Dickenrichtung orthogonale Richtung eine Breitenrichtung der Innenlasche ist, wobei die Innenlasche auf ihrer im fertig montierten Zustand in einer Fahrradkette zu der weiteren Innenlasche desselben Innenlaschenglieds hinweisenden Innenseite zwei in Längsrichtung der Innenlasche mit Abstand voneinander vorgesehene und durch einen in Längsrichtung zwischen ihnen gelegenen Vertiefungsbereich getrennte ebene Flächen aufweist, von welchen jede ebene Fläche eine andere der Verbindungsöffnungen umgibt, wobei der Vertiefungsbereich bezüglich den ebenen Flächen zu einer Innenseite entgegengesetzten Außenseite der Innenlasche hin zurückgesetzt ist.

Eine solche Fahrradketten-Innenlasche ist aus der EP 2 535 616 A oder auch aus der US 4 265 134 A bekannt.

Die EP3318335 A1 offenbart eine asymmetrische Fahrradketten-Innenlasche und eine Fahrradketten-Außenlasche gemäß dem Oberbegriff der Ansprüche 1 und 18. Die aus diesen Druckschriften bekannten Fahrradketten-Innenlaschen (nachfolgend auch nur als "Innenlaschen" bezeichnet) sind sowohl zu einer die Verbindungsgerade in ihrer Längsmitte orthogonal schneidenden Symmetrieebene als auch zu einer die Verbindungsgerade enthaltenden und in Dickenrichtung verlaufenden Symmetrieebene jeweils spiegelsymmetrisch ausgebildet, was deren Montierbarkeit erleichtert. Es reicht dann nämlich aus, lediglich auf die unterschiedlich ausgestalteten Innen- und Außenseiten der Innenlasche zu achten, während bei zutreffender Orientierung von Innen- und Außenseite der Innenlasche ein Orientierungsfehler der Innenlasche bei der Kettenmontage unmöglich ist.

Die oben genannten ebenen Flächen, welche auf der Innenseite der Innenlasche die Verbindungsöffnungen umgeben, sind als Anlageflächen zur Anlage von Stirnseiten von Kettenrollen ausgebildet. An jedem Verbindungsbauteil, welches zwei sich gegenüberliegende Innenlaschen zu einem Innenlaschenglied verbindet, ist jeweils eine Kettenrolle drehbar aufgenommen. Ein solches Verbindungsbauteil kann beispielsweise ein Verbindungsbolzen oder ein Verbindungsniet oder ein mehrteiliges Verbindungsbauteil sein.

Bei einer betriebsbereit am Fahrrad angeordneten Fahrradkette ist die durch die Achse der Hinterradnabe definierte axiale Richtung parallel zur Dickenrichtung der Kettenlaschen. Diese beiden Richtungsangaben sind daher äquivalent. Zur Vermeidung von Missverständnissen wird zur Beschreibung der konstruktiven Verhältnisse von Fahrradkette und Hinterrad-Ritzelanordnung das eingangs eingeführte orthogonale Koordinatensystem der Innenlasche aus Längsrichtung, Dickenrichtung und Breitenrichtung benutzt.

Mit dem Jahrzehnte alten Trend in der Fahrradtechnik, die Anzahl an Ritzeln an der Hinterradnabe zu erhöhen, um eine möglichst feine Abstufung der Drehmomentübertragung von den Pedalkurbeln zur Hinterradnabe zu erhalten, wurden die Ritzelabstände zwischen benachbarten Ritzeln kleiner, die Ritzel dünner und die Ketten schmäler. Der oben genannte Vertiefungsbereich ist beispielsweise Folge der in Dickenrichtung der Innenlaschen immer schmäler werdenden Fahrradketten. Denn durch den Vertiefungsbereich wird zumindest im Bereich eines Innenlaschen-Zwischenraums, in den ein Ritzelzahn zur Herstellung eines Kämmungseingriffs mit einem Innenlaschenglied der Fahrradkette eintritt, der in Dickenrichtung zu messende Laschenabstand zwischen den Innenseiten der Innenlaschen lokal vergrößert, verglichen mit dem Laschenabstand im Bereich zwischen den ebenen Flächen einander gegenüberliegender Innenlaschen. Dies erleichtert den Eintritt des Ritzels in den Innenlaschen-Zwischenraum. Der Innenlaschen-Zwischenraum ist dabei in Längsrichtung des Innenlaschenglieds begrenzt durch die beiden in Längsrichtung aufeinander folgenden Kettenrollen des Innenlaschenglieds und in Dickenrichtung begrenzt durch die beiden Innenlaschen des Innenlaschenglieds, zwischen welchen die Kettenrollen angeordnet sind.

So offenbart die US 4 265 134 A ausdrücklich, den Vertiefungsbereich von jedem Seitenrand der Innenlasche ausgehend zur Verbindungsgerade hin mit abnehmender Längsabmessung, also mit einer zur Verbindungsgerade parallelen Abmessung, auszubilden, um so eine sich in den Innenlaschen-Zwischenraum hinein verjüngende Ausnehmung an den Innenseiten der Innenlaschen zu erhalten. Dies soll einen Eintritt eines Ritzelzahns in den Innenlaschen-Zwischenraum besonders erleichtern.

Mit zunehmender Ritzelanzahl und damit mit abnehmendem Laschenabstand zwischen den Laschen der einzelnen Fahrradkettenglieder ist eine immer präzisere Führung der Kette im Antriebsbetrieb erforderlich, da die Eingriffsorte zwischen der Fahrradkette und den einzelnen Ritzeln einer Hinterrad-Ritzelkassette, welche einzelnen Übersetzungsverhältnissen zugeordnet sind, längs der Hinterradachse zunehmend näher beieinander liegen.

Es ist daher Aufgabe der vorliegenden Erfindung, eine technische Lehre bereitzustellen, welche eine möglichst präzise Führung einer Fahrradkette selbst dann ermöglicht, wenn die alternierend Außen- und Innenlaschenglieder aufweisende Fahrradkette sehr schmal zum Eingriff mit einer Hinterrad-Ritzelanordnung, beispielsweise mit 10 oder mehr Ritzeln, ausgebildet ist.

Diese Aufgabe wird erfindungsgemäß gelöst durch eine Fahrradketten-Innenlasche der eingangs genannten Art, welche als asymmetrische Fahrradketten-Innenlasche ausgebildet ist, sodass sich ein längs der Längsrichtung zu messender Abstand zwischen den ebenen Flächen längs der Breitenrichtung derart verändert, dass ein zwischen zwei Abstandsbereichen mit jeweils größeren Abstandswerten gelegener Ort mit kleinstem, aber endlich großem Minimalabstandswert in Breitenrichtung mit Abstand von der Verbindungsgerade entfernt gelegen ist.

Häufig wurde im Stand der Technik die Fahrradkette für den bestimmungsgemäßen Antriebsbetrieb konstruktiv allein hinsichtlich ihres Kämmungseingriffs mit den Ritzeln der Hinterrad-Ritzelanordnung ausgelegt. Dabei wurde häufig außer Acht gelassen, dass die Fahrradkette, die durch einen hinteren Umwerfer (Kettenschaltwerk) zwischen den einzelnen Ritzeln der Hinterrad-Ritzelanordnung umlegbar ist, nicht nur mit den Ritzeln der Hinterrad-Ritzelanordnung, sondern auch mit den Rollen des Kettenschaltwerks in Eingriff steht. Dabei kommt besonders der die Fahrradkette längs der Hinterradachse positionierenden Kettenführungsrolle eine wichtige Rolle zu.

Eine Innenlasche einer zu einem Kettenring ausgebildeten geschlossen umlaufenden Fahrradkette erreicht beim Umlauf am Fahrrad ausgehend von einem vorderen Kettenblatt in der Regel in der genannten Reihenfolge zuerst die Spannrolle und dann die Kettenführungsrolle des Schaltwerks, anschließend das durch Positionierung des Schaltwerks ausgewählte kämmende Ritzel und schließlich wieder das Kettenblatt. Dabei greifen die Kettenführungsrolle und das kämmende Ritzel auf unterschiedlichen Seiten des Kettenrings an diesem an. Folglich tauchen im Antriebsbetrieb die Zähne der Kettenführungsrolle, welche üblicherweise mit erheblich geringerer Zahnhöhe ausgebildet sind als die Zähne der Ritzel, und die Zähne des kämmenden Ritzels von entgegengesetzten Seiten her in den Innenlaschen-Zwischenraum ein.

Zwar läuft die Kette stets über dieselbe Kettenführungsrolle und muss nicht von dieser auf eine andere umgelegt werden, wie dies bei einem Schaltvorgang an der Hinterrad-Ritzelanordnung der Fall ist. Dennoch können zunehmend extremer werdende Abmessungen von Fahrradketten auch zu Problemen mit dem Eingriff zwischen der Kettenführungsrolle und der Fahrradkette führen, was die Schaltpräzision an der Hinterradnabe nachvollziehbar beeinträchtigen kann.

Mit der oben vorgestellten Innenlasche ist es äußerst vorteilhaft möglich, die bei einem Kämmungseingriff dem jeweiligen Zahn zugewandte Innenseite der Innenlasche sowohl für den Kämmungseingriff mit dem in der Regel höhere Ritzelzähne aufweisenden Ritzel als auch für den Kämmungseingriff mit der in der Regel niedrigere Rollenzähne aufweisenden Kettenführungsrolle optimal auszubilden. Sowohl der Ritzelzahn wie auch der Rollenzahn verjüngen sich von ihrem Zahnfuß zu ihrem Zahnkopf hin. Dabei ist die Zahnhöhe des Ritzelzahns in der Regel so hoch, dass der in den Innenlaschen-Zwischenraum einragende Ritzelzahn ausgehend von dem einen, für ihn eintrittsseitigen Seitenrand der Innenlasche in Breitenrichtung der Innenlasche bzw. des Innenlaschenglieds über die Verbindungsgerade hinausragt. Im Gegensatz dazu ist die Zahnhöhe eines Rollenzahns der Kettenführungsrolle in der Regel so niedrig, dass der in den Innenlaschen-Zwischenraum einragende Rollenzahn ausgehend von dem anderen, entgegengesetzten für den Rollenzahn eintrittsseitigen Seitenrand in Breitenrichtung nicht bis zur Verbindungsgeraden reicht. Da an der vorgestellten Innenlasche der Minimalabstandswert des Längsabstands zwischen den ebenen Flächen mit Abstand in Breitenrichtung von der Verbindungsgerade entfernt gelegen ist, und da weiter in Breitenrichtung beiderseits des Orts des Minimalabstandswerts ein größerer Abstand zwischen den ebenen Flächen vorliegt, trägt die vorgestellte Innenlasche sowohl den konstruktiven Unterschieden von Ritzelzahn und Rollenzahn als auch den mit diesem Zähnen eintretenden Eingriffssituationen Rechnung. Entsprechendes gilt für ein durch zwei gleiche, einander spiegelsymmetrisch gegenüberliegende Innenlaschen gebildetes Innenlaschenglied.

Üblicherweise sind Kettenlaschen im Bereich der Längsmitte der Verbindungsgeraden in Breitenrichtung eingeschnürt, d. h. eine Kettenlasche weist im Bereich der Längsmitte der Verbindungsgeraden eine geringere Breitenabmessung auf als im Bereich der Verbindungsöffnungen. In vorteilhafter Weise kann zusätzlich zum Eingriff eines Zahns in den Innenlaschen-Zwischenraum ein Seitenrand der Innenlasche die Innenlasche an der jeweiligen zahntragenden Komponente dadurch stabilisieren, dass die Entfernungen der Seitenrandabschnitte der Innenlasche, welche in Längsrichtung zwischen den Verbindungsöffnungen verlaufen, von der Verbindungsgerade in Breitenrichtung auf unterschiedlichen Seiten der Verbindungsgeraden unterschiedlich groß sind.

Da zum einen die Ritzelzähne in Breitenrichtung tiefer in den Innenlaschen-Zwischenraum einragen als die Rollenzähne und da weiter die Fahrradkette stets mit derselben Kettenführungsrolle, aber mit Ritzeln unterschiedlichen Durchmessers in Eingriff ist, ist vorzugsweise der Seitenrand der Innenlasche mit der größeren Entfernung von der Längsmitte der Verbindungsgeraden der für einen Rollenzahn eintrittsseitige Seitenrand. Dies bedeutet, dass der Ort des Minimalabstandswerts bezüglich der Verbindungsgeraden bevorzugt auf derjenigen Seite der Innenlasche gelegen ist, auf welcher die Entfernung des Seitenrandabschnitts von der Verbindungsgeraden größer ist. Somit können auch für einen Rollenzahn mit kurzer Zahnhöhe mit dem Rollenzahn in Breitenrichtung überlappende Wandabschnitte auf der Innenseite der Innenlasche bereitgestellt werden, die die Innenlasche bzw. die mit ihr gebildete Fahrradkette sicher in Dickenrichtung auf der Führungsrolle führen. Da sich im Gegensatz zu den Ritzeln, mit denen die Kette in Eingriff gelangt, der Krümmungsradius der Kettenführungsrolle nicht ändert, kann der für den Rollenzahn eintrittsseitige Seitenrand derart ausgestaltet sein, dass er während eines Eingriffs eines Rollenzahns an einer Außenfläche der eines Rollenkörpers der Kettenführungsrolle anliegt und so die unter Beteiligung der vorgestellten Innenlasche gebildete Fahrradkette zusätzlich an der Kettenführungsrolle stabilisiert.

Eine möglichst stabile Seitenführung in Dickenrichtung eines mit der vorgestellten Innenlasche gebildeten Innenlaschenglieds an einem Rollenzahn mit kurzer Zahnhöhe kann dadurch erreicht werden, dass der Seitenrandabschnitt mit der größeren Entfernung von der Verbindungsgeraden geradlinig parallel zu dieser verläuft. Der geradlinige Seitenrandabschnitt kann dann als Tangente an einem, beispielsweise doppelt-konischen, Rollenkörper der Kettenführungsrolle stabilisierend anliegen.

Im Gegensatz zur Kettenführungsrolle trägt ein radial innerhalb der Zähne eines Ritzels gelegener Ritzelkörper nicht zur Führung der Kette am Ritzel bei. Daher ist bevorzugt der entgegengesetzte Seitenrandabschnitt mit der kleineren Entfernung von der Längsmitte der Verbindungsgeraden zur Gewichtseinsparung einerseits und zur erleichterten Herstellung eines Kämmungseingriffs mit einem Ritzel während eines Schaltvorgangs andererseits derart ausgebildet, dass er sich längs seines Verlaufs in Längsrichtung der Verbindungsgeraden zunächst annähert und sich dann wieder von dieser entfernt. Durch diese Einschnürung kann der Betrag verringert werden, um welchen die Verbindungsgerade der Innenlasche über einen Ritzelzahnkopf angehoben werden muss, um insbesondere beim Schaltvorgang auf ein durchmessergrößeres Ritzel den zunächst in Dickenrichtung außerhalb eines Innenlaschenglieds gelegenen Ritzelzahnkopf in den Bereich zwischen den beiden Innenlaschen zu verlagern.

Eine vorteilhafte Eingriffssituation sowohl mit Ritzelzähnen als auch mit Rollenzähnen der Kettenführungsrolle kann dadurch erreicht werden, dass der Ort des Minimalabstandswerts einem in Längsrichtung zwischen den Verbindungsöffnungen verlaufenden Seitenrandabschnitt der Innenlasche in Breitenrichtung näher gelegen ist als der Verbindungsgeraden. Der Abstand zwischen dem Ort des Minimalabstandswerts und einem Seitenrandabschnitt ist im Zweifel in Längsrichtung dort zu bestimmen, wo der Seitenrandabschnitt in Breitenrichtung der Verbindungsgeraden am stärksten angenähert ist.

Um den Vertiefungsbereich einer Innenlasche als Einführhilfe eines Zahns in den Innenlaschen-Zwischenraum oder/und als näherungsweise Negativ-Formschlusskontur eines bereits in den Innenlaschen-Zwischenraum eingeführten Zahns nutzen zu können, kann in vorteilhafter Weiterbildung der vorliegenden Erfindung in Breitenrichtung beiderseits der Verbindungsgeraden, jeweils mit Abstand vom Ort des Minimalabstandswerts, je ein Ort eines Maximalabstandswert existieren, an welchem der auf der jeweiligen Seite der Verbindungsgerade an der Innenlaschen-Innenseite auftretende, in Längsrichtung zu messende Abstand zwischen den beiden ebenen Flächen am größten ist. Zur Klarstellung sei betont, dass jeder der beiden Maximalabstandswerte betragsmäßig größer als der Minimalabstandswert ist. Aufgrund der in Breitenrichtung der Innenlaschen bestehenden Asymmetrie der vorgestellten Innenlasche ist bevorzugt die Entfernung des Orts des Minimalabstandswerts von den jeweiligen Orten der Maximalabstandswerte unterschiedlich groß.

Bevorzugt durchsetzt der Vertiefungsbereich die Innenlasche in Breitenrichtung vollständig.

Der Ort des Minimalabstandswerts kann lediglich ein quasi-punktförmiger Ort in Breitenrichtung ohne nennenswerte Abmessung in Breitenrichtung sein oder kann ein sich in Breitenrichtung über eine vorbestimmte Strecke erstreckender Minimalabstandswertebereich sein.

Grundsätzlich kann ein Rand einer ebenen Fläche im Bereich zwischen den Verbindungsöffnungen einen gekrümmten Verlauf aufweisen, wie auch die radial äußeren Ränder der an den ebenen Flächen mit ihren Stirnseiten anliegenden Kettenrollen einen gekrümmten, nämlich kreisförmigen Verlauf aufweisen. Während des Eintauchens eines Ritzelzahns oder auch eines Rollenzahns in einen Innenlaschen-Zwischenraum kann es für die Stabilität des mit den vorgestellten Innenlaschen gebildeten Innenlaschenglieds und damit einer derartige Innenlaschenglieder aufweisenden Fahrradkette insgesamt vorteilhaft sein, wenn wenigstens eine ebene Fläche bezogen auf eine in Dickenrichtung verlaufende Mittelachse durch die Verbindungsöffnungen radial über die zylindrische Außenfläche einer Kettenrolle vorsteht. Dies kann verhindern, dass bei der Herstellung eines Kämmungseingriffs zwischen Zahn und Innenlaschenglied ein Abschnitt des Zahnkopfs zwischen Kettenrolle und Innenlasche eindringt und so möglicherweise das Innenlaschenglied in Dickenrichtung aufweitet oder sogar sprengt. Der genannte vorteilhafte lokale radiale Überstand der ebenen Fläche über die Kettenrolle kann dadurch bereitgestellt werden, dass in einem zwischen den Verbindungsöffnungen gelegenen Längsbereich der Innenlasche der Rand wenigstens einer ebenen Fläche, in Breitenrichtung wenigstens abschnittsweise geradlinig oder mit größtem Krümmungsradius längs eines Umlaufs des Flächenrandes um die Verbindungsöffnung verläuft. Bevorzugt verlaufen aus den genannten Gründen in dem Längsbereich der Innenlasche die Ränder beider ebenen Flächen beiderseits des Vertiefungsbereichs wenigstens abschnittsweise geradlinig.

Dann, wenn in dem genannten Längsbereich die Ränder beider ebener Flächen wenigstens abschnittsweise geradlinig verlaufen, können die geradlinigen Randabschnitte der Ränder der ebenen Flächen wenigstens abschnittsweise parallel zueinander verlaufen. Bevorzugt bildet dann der Breitenabschnitt, in welchem die geradlinigen Randabschnitte der Ränder der ebenen Flächen verlaufen, den oben genannten Minimalabstandswertebereich. Dies ist beispielsweise von Vorteil, wenn die mit der Innenlasche zusammenwirkende Ritzelanordnung zahlreiche Ritzelzähne unterschiedlicher Zahnhöhe aufweist. Der Vertiefungsbereich kann dann immer noch für diese unterschiedlichen Ritzelzähne als Einführhilfe in den Innenlaschen-Zwischenraum dienen und ist für eine Vielzahl von unterschiedlichen Ritzelzähnen nach Herstellung des Kämmungseingriffs für deren definierte Anordnung im Innenlaschen-Zwischenraum ausgebildet.

Dann, wenn in dem genannten Längsbereich die Ränder beider ebenen Flächen wenigstens abschnittsweise geradlinig verlaufen, kann eine sehr genaue Führung der Innenlaschenglieder und damit der Kette an sich zum Zahnkopf hin verjüngenden Ritzelzähnen von der Innenlasche dadurch bereitgestellt werden, dass sich wenigstens abschnittsweise der in Längsrichtung zu messende Abstand der geradlinigen Abschnitte von Rändern der ebenen Flächen in Breitenrichtung mit zunehmender Annäherung an den Ort des Minimalabstandswerts verringert. Wenngleich diese Verringerung auch stufenweise erfolgen kann, ist im Hinblick auf die Kontur des in den Innenlaschen-Zwischenraum eintretenden und vorübergehend dort aufgenommenen Ritzelzahns, aber auch Rollenzahns, eine kontinuierliche stufenlose Verringerung dieses Abstands bevorzugt.

Es können zum Eingriff mit den Ritzelzähnen ebenso wie mit den Rollenzähnen beiderseits des Orts des Minimalabstandswerts geradlinig verlaufende Abschnitte der Ränder der ebenen Flächen ausgebildet sein, deren Abstand in Längsrichtung sich bei Annäherung an den Ort des Minimalabstandswerts verringert.

Um zum einen den Verlauf einer ebenen Fläche der Gestalt der an ihr anliegenden Kettenrolle anzupassen und um zum anderen einen möglichst knick- oder/und sprungfreien und damit einen Eintritt eines Zahns in den Innenlaschen-Zwischenraum begünstigenden Rand der ebenen Fläche bereitstellen zu können, kann in einem zwischen den Verbindungsöffnungen gelegenen Längsbereich der Innenlasche der Rand wenigstens einer ebenen Fläche in Breitenrichtung kontinuierlich gleichsinnig gekrümmt verlaufen. Dabei kann der Verlauf des Randes der ebenen Fläche dann besonders gut an die sich zum Zahnkopf hin verjüngende Kontur insbesondere eines Ritzelzahns angepasst werden, wenn dem gekrümmten Verlauf des Randes der ebenen Fläche längs der Breitenrichtung sich ändernde Krümmungsradien zugeordnet sind. Vorzugsweise werden die Krümmungsradien mit zunehmendem Abstand von dem Ort des Minimalabstandswerts kleiner, d. h. die Krümmung des jeweiligen Randabschnitts stärker. Dann kann außerdem auch mit einem gekrümmten Randverlauf der oben genannte radiale Überstand der ebenen Fläche über die zylindrische Mantelfläche einer der ebenen Fläche zur Anlage daran zugeordneten Kettenrolle realisiert werden. Vorzugsweise gilt dies für beide ebene Flächen der Innenlasche.

Grundsätzlich soll nicht ausgeschlossen sein, dass der Vertiefungsbereich in einem die Verbindungsgerade enthaltenden Breitenbereich bei Betrachtung der Innenlaschen-Innenseite konvex gekrümmt ausgebildet ist, etwa um eine zur Verbindungsgerade parallele Krümmungsachse gekrümmt. Ein größerer für die Aufnahme eines Zahns zur Verfügung stehender Innenlaschen-Zwischenraum kann jedoch mit einem Vertiefungsbereich erhalten werden, welcher in einem die Verbindungsgerade enthaltenden Breitenbereich einen ebenen Oberflächenbereich aufweist. Grundsätzlich kann dieser ebene Oberflächenbereich geneigt sein. Zur Erleichterung der Einführung eines Zahns in den Innenlaschen-Zwischenraum ist die Neigung dann, wenn sie vorhanden ist, vorzugsweise derart, dass der in Dickenrichtung zu messende Laschenabstand der ebenen Oberflächenbereiche zweier einander spiegelsymmetrisch gegenüberliegender Innenlaschen ein und desselben Innenlaschenglieds in Breitenrichtung vom Ort des Minimalabstandswerts weg zu einem Seitenrand hin größer wird. Zur Bereitstellung eines möglichst großen Aufnahmevolumens des Innenlaschen-Zwischenraum ist jedoch ein zur Dickenrichtung orthogonaler ebener Oberflächenbereich bevorzugt.

Der ebene Oberflächenbereich ist, der vorgestellten Asymmetrie der Innenlasche folgend, bevorzugt in Breitenrichtung relativ zur Verbindungsgerade zu einem Seitenrandbereich hin versetzt angeordnet. Bevorzugt ist der ebene Oberflächenbereich zu jenem Seitenrandbereich hin versetzt angeordnet, welcher dem Ort des Minimalabstandswerts näher gelegen ist, sodass an dem für den Ritzelzahn eintrittsseitigen Seitenrandabschnitt eine Einführschräge mit in Breitenrichtung größerer Abmessung als an dem für den Rollenzahn eintrittsseitigen Seitenrandabschnitt bereitgestellt werden kann, beispielsweise in Gestalt einer Anfasung. Dies erleichtert die Einführung eines Ritzelzahns in den Innenlaschen-Zwischenraum.

Zur einfachen aber sicheren Definition des Abstands zweier ein Innenlaschenglied bildender Innenlaschen sowie weiter als definierte Achsformation, welche eine Kettenrolle drehbar aufnehmen kann, sind gemäß einer vorteilhaften Weiterbildung die Verbindungsöffnungen radial innerhalb der sie jeweils umgebenden ebenen Flächen von Hülsenabschnitten umgeben. Die Hülsenabschnitte stehen in Dickenrichtung der Innenlaschen über die sie umgebenden ebenen Flächen vor.

Zur Erzielung einer in Dickenrichtung der sie bildenden Laschen möglichst schlanken Fahrradkette weist die der Innenseite entgegengesetzte Außenseite der Innenlasche bevorzugt eine ebene Außenfläche auf, die sich sowohl in Längsrichtung zwischen den Verbindungsöffnungen erstreckt, wo bei einem Schaltvorgang eine Seitenfläche eines Ritzelzahns eines durch den Schaltvorgang in Eingriff kommenden Ritzels in Anlageeingriff gelangen kann, als auch die Verbindungsöffnungen wenigstens teilweise umgibt, wo an der fertig montierten Fahrradkette Innenseitenbereiche einer Außenlasche in Anlage kommen können. Vorzugsweise umgibt die ebene Außenfläche die Verbindungsöffnungen vollständig.

Zwar ist nicht grundsätzlich ausgeschlossen, dass die Außenseite der Innenlasche neben der ebenen Außenfläche noch eine weitere, nicht-ebene Außenfläche aufweist. Jedoch ist zur Erzielung der oben genannten schlanken Fahrradkette bevorzugt, dass die Außenseite frei ist von Vorsprüngen, die in Dickenrichtung über die ebene Außenfläche vorstehen.

Dagegen soll nicht nur nicht ausgeschlossen sein, sondern es ist sogar bevorzugt, dass die Außenseite der Innenlasche die Verbindungsöffnungen umgebende Einsenkungen bzw. Vertiefungen aufweist, in welche korrespondierende Vorsprünge an Innenseiten von Außenlaschen eingreifen können, um die Innenlasche und eine sich an sie anschließende Außenlasche relativ zu einander zu positionieren. Zur Erzielung auch einer Zentrierungswirkung sind die Vertiefungen vorzugsweise in Richtung von der ebenen Außenfläche weg sich verjüngend ausgebildet. Beispielsweise können die Vertiefungen eine negativ-kegelstumpfförmige Gestalt aufweisen.

In vorteilhafter Weise kommt es für die vorgeschlagene Innenlasche dann nicht auf die Laufrichtung der unter ihrer Beteiligung gebildeten Fahrradkette an, wenn die Innenseite oder/und die Außenseite, vorzugsweise die gesamte Innenlasche, bezüglich einer zur Verbindungsgeraden orthogonalen Symmetrieebene spiegelsymmetrisch ist.

Die oben genannte Aufgabe wird ebenfalls gelöst durch eine Fahrradketten-Außenlasche mit zwei mit Abstand voneinander ausgebildeten, die Außenlasche in ihrer Dickenrichtung durchsetzenden Verbindungsöffnungen, welche jeweils zur Aufnahme eines Verbindungsbauteils ausgebildet sind, um die Außenlasche zur Bildung eines Außenlaschenglieds einer Fahrradkette mit einer weiteren Außenlasche zu verbinden, wobei eine jeweilige Mittelachsen der Verbindungsöffnungen verbindende Verbindungsgerade eine Längsrichtung der Außenlasche definiert und wobei eine sowohl zur Längsrichtung als auch zur Dickenrichtung orthogonale Richtung eine Breitenrichtung der Außenlasche ist, wobei die Außenlasche auf ihrer im fertig montierten Zustand in einer Fahrradkette zu der weiteren Außenlasche des selben Außenlaschenglieds hinweisenden Innenseite zwei in Längsrichtung der Außenlasche mit Abstand voneinander vorgesehene und durch einen in Längsrichtung zwischen ihnen gelegenen Vertiefungsbereich getrennte ebene Flächen aufweist, von welchen jede ebene Fläche eine andere der Verbindungsöffnungen umgibt, wobei der Vertiefungsbereich bezüglich den ebenen Flächen zu einer der Innenseite entgegengesetzten Außenseite der Außenlasche hin zurückgesetzt ist, wobei in einem die Verbindungsgerade enthaltenden, sich in Breitenrichtung erstreckenden Minimalabstandsbereich der in Längsrichtung zu messende Abstand zwischen den ebenen Flächen minimal ist, wobei der Abstand zwischen den ebenen Flächen ausgehend von dem Minimalabstandsbereich zu jedem der beiden die Außenlasche in Breitenrichtung begrenzenden Seitenränder hin größer wird, wobei der Abstand in Richtung zu dem einen Seitenrand hin auf einer ersten Seite einer die Verbindungsgerade in ihrer Längsmitte orthogonal schneidenden Bezugsebene stärker anwächst, als auf der entgegengesetzten zweiten Seite der Bezugsebene, und wobei der Abstand in entgegengesetzter Richtung zu dem jeweils anderen Seitenrand hin auf der zweiten Seite der Bezugsebene stärker anwächst als auf deren ersten Seite.

Eine solche Außenlasche kann die Einführung eines Ritzelzahns in den Außenlaschen-Zwischenraum erleichtern. Die Vertiefungsbereiche einander in Dickenrichtung gegenüberliegender und durch Verbindungsbauteile zu einem Außenlaschenglied einer Fahrradkette verbundener Außenlaschen bilden an dem Außenlaschenglied einen Bereich, in welchem das Außenlaschenglied einen größeren in Dickenrichtung zu messenden Laschenabstand aufweist, als beispielsweise im Bereich der ebenen Flächen, welche zur Anlage an Außenseiten von Innenlaschen ausgebildet sind. Durch die Aufweitung der Vertiefungsbereiche bei Annäherung zu den die Außenlasche in Breitenrichtung begrenzenden Seitenrändern hin, können die Vertiefungsbereiche für Ritzelzähne wie Einführtrichter wirken und Ritzelzähne ausgehend von einer nahezu beliebigen Anordnung eines Ritzelzahnkopfs im Eintrittsbereich eines Außenlaschen-Zwischenraums in diesen Zwischenraum hineinführen.

Zu den Verbindungsbauteilen von Außenlaschengliedern gilt das zu den Verbindungsbauteilen von Innenlaschengliedern eingangs Gesagte.

Dabei muss der Abstand zwischen den ebenen Flächen nicht kontinuierlich vom Seitenrand bis hin zum Minimalabstandsbereich kleiner werden. Es ist völlig ausreichend, wenn eine Veränderung des Abstands zwischen den ebenen Flächen im Wesentlichen in einem dem jeweiligen Seitenrand nahegelegenen Bereich erfolgt. Dadurch kann eine vorteilhaft steife Außenlasche erhalten werden. Abhängig davon, wie der Rand der jeweiligen ebenen Flächen in dem Bereich verläuft, in welchen die ebenen Flächen in Längsrichtung an den Vertiefungsbereich angrenzen, kann eine sowohl den Eintritt eines Ritzelzahns in den Außenlaschen-Zwischenraum fördernde als auch vorteilhaft steife Außenlasche dadurch erhalten werden, dass für wenigstens einen Breitenbereich der Außenlasche gilt, dass sich ein in Längsrichtung zu messender Abstand zwischen an den Vertiefungsbereich angrenzenden Abschnitten von Rändern der ebenen Flächen in den der Längsmitte des Seitenrands nächstgelegenen 50 %, vorzugsweise 30 %, besonders bevorzugt 10 % der Breitenabmessung des Breitenbereichs stärker ändert als in den Verbindungsgerade nächstgelegenen 30 %, vorzugsweise 40 %, besonders bevorzugt 50 % der Breitenabmessung des Breitenbereichs.

Der genannte Breitenbereich der Außenlasche erstreckt sich ausgehend von der Verbindungsgerade parallel zur Breitenrichtung bis zur Längsmitte eines Seitenrands hin. Mithin weist die Außenlasche zwei Breitenbereiche auf, zu jeder Seite der Verbindungsgerade je einen. Vorzugsweise gilt das oben Gesagte für beide Breitenbereiche einer Außenlasche.

Für eine Fahrradkette ist es wichtig, dass sich miteinander über ein Verbindungsbauteil gelenkig verbundene Innen- und Außenlaschenglieder um die Achse des Verbindungsbauteils sicher abwinkeln lassen. Dadurch kann der saubere Umlauf der Kette um Kettenblätter, Ritzel und Rollen unterschiedlicher Durchmesser sichergestellt werden. Dies gewährleistet, dass die Fahrradkette mit den jeweiligen zahntragenden Komponenten des Fahrrads in Eingriff bleibt und nicht etwa dazu neigt, von einem Kettenblatt oder einem Ritzel zu springen. Ein Grund für eine unerwünschte Versteifung einer Fahrradkette im Sinne eines erhöhten Abwinkelwiderstands ist ein Eindringen von Partikeln in den Bereich zwischen aneinander anliegenden Flächenabschnitten von Innen- und Außenlasche.

Eine Ausgestaltung der Außenlasche, welche sowohl einen Eintritt eines Ritzelzahns in den Außenlaschen-Zwischenraum fördert als auch einem Eintritt von Partikeln zwischen die genannten Flächenabschnitte von Innen- und Außenlasche entgegenwirkt, kann vorteilhaft dadurch erzielt werden, dass der Abstand zwischen den ebenen Flächen auf der Innenseite der Außenlasche in Richtung zu dem einen Seitenrand hin auf einer ersten Seite einer die Verbindungsgerade in ihrer Längsmitte orthogonal schneidenden Bezugsebene stärker anwächst als auf der entgegengesetzten zweiten Seite der Bezugsebene. Dadurch kann der Rand einer ebenen Fläche deckungsgleich mit dem Außenrand eines an dieser ebenen Fläche anliegenden Endabschnitts einer Innenlasche verlaufen und kann der Rand der in Längsrichtung entfernt gelegenen zweiten ebenen Fläche bezüglich einer in Dickenrichtung verlaufenden Mittelachse der von ihr umgebenden Verbindungsöffnung radial über den Außenrand eines an dieser anderen ebenen Fläche anliegenden Endabschnitts einer anderen Innenlasche überstehen. Dieser radiale Überstand verhindert eine Annäherung von Partikeln, die etwa an einem verschmutzten Ritzelzahnkopf mitgeführt werden, an den zwischen Außenlasche und Innenlasche bestehenden Spalt.

An der erstgenannten ebenen Fläche auf der Innenseite der Außenlasche und der an diesem anliegenden Endabschnitt der Innenlasche besteht dieser radiale Überstand nicht oder in geringerem Maße. Dennoch kann selbst bei deckungsgleichen, und zur Vermeidung von Schmutzeintritt in den Spalt zwischen Innen- und Außenlasche bevorzugt fasenfreien, Rändern von ebener Fläche der Außenlaschen-Innenseite und Endabschnitt der Innenlaschen-Außenseite immer noch ein enges Spaltmaß zwischen ebener Fläche und Endabschnitt der Innenlasche eingehalten werden. Dies wirkt dem Eintritt von Partikeln oder sogar einem Abschnitt eines Zahnkopfes in den Spalt entgegen. Sowohl der Rand der ebenen Fläche der Außenlaschen-Innenseite als auch der Außenrand des anliegenden Endabschnitts der Innenlaschen-Außenseite sind in dem genannten Bereich bei deckungsgleicher Ausbildung bevorzugt kreisförmig mit der Mittelachse des Verbindungsbauteils als Mittelachse der kreisförmigen Gestalt ausgebildet. Dann bleibt unabhängig von einer Relativverdrehung von Außenlasche und Innenlasche die Deckungsgleichheit der Randabschnitte über einen vorbestimmten Relativbewegungsabschnitt von Innen- und Außenlasche erhalten.

Bevorzugt wächst der Abstand auch in entgegengesetzter Richtung zu dem jeweils anderen Seitenrand hin auf den unterschiedlichen Seiten der Bezugsebene unterschiedlich stark an, und zwar besonders bevorzugt auf der zweiten Seite der Bezugsebene stärker an als auf deren ersten Seite.

Eine Verjüngung des Vertiefungsbereichs von einem Seitenrandabschnitt in Breitenrichtung zur Verbindungsgerade hin kann unter den zuvor genannten Randbedingungen einer nicht-spiegelsymmetrischen Außenlasche mit vorteilhaft sprung- und knickfreien Rändern einer ebenen Fläche in einem an den Vertiefungsbereich angrenzenden Bereich dadurch erhalten werden, dass für die ebene Fläche gilt, dass ein an in diesem Bereich der Rand der ebenen Fläche in Breitenrichtung auf unterschiedlichen Seiten der Verbindungsgerade unterschiedlich stark gekrümmt ist. Vorzugsweise gilt dies für beide ebenen Flächen der Innenseite der Außenlasche, die jeweils eine andere Verbindungsöffnung umgeben.

Ein radialer Überstand einer ebenen Fläche auf einer Seite der Verbindungsgeraden und ein geringerer radialer Überstand oder ein mit dem Außenrand der benachbarten Innenlasche deckungsgleicher Verlauf des Randes der ebenen Fläche auf der anderen Seite der Verbindungsgeraden kann dadurch erhalten werden, dass für die ebene Fläche gilt, dass in einem an den Vertiefungsbereich angrenzenden Bereich der Randes der ebenen Fläche in Breitenrichtung auf einer Seite der Verbindungsgerade abschnittsweise einen gekrümmten und auf der anderen Seite abschnittsweise einen geradlinigen Verlauf hat. Vorzugsweise gilt dies für beide ebene Flächen. Dies sei am Beispiel eines Kettengelenks erläutert, welches gebildet ist von einem Außenlaschenglied und einem mit diesem verbundenen, in Antriebsdrehrichtung des von der Fahrradkette gebildeten Kettenrings nachlaufenden Innenlaschenglied. Wegen des Nachlaufens in Antriebsdrehrichtung stehen die Kettenrolle des Kettengelenks sowie gegebenenfalls Außenrandbereiche der die Kettenrolle in Breitenrichtung zwischen sich haltenden Innenlaschen während eines Kämmungseingriffs mit einem Ritzel dauerhaft in drehmomentübertragendem Anlageeingriff mit einem Ritzelzahn. Da kann es vorteilhaft sein, die ebenen Flächen der Außenlaschen-Innenseiten, die die an der Bildung dieses Kettengelenks beteiligten Verbindungsöffnungen umgeben, auf der der Ritzelachse zugewandten, also am Kettenring radial innen gelegenen Seite des Kettengelenks mit hohem radialen Überstand bezüglich der Außenränder der an ihnen anliegenden Endbereiche von Innenlaschen-Außenseiten auszubilden. Auf der am Kettenring radial außen gelegenen Seite des Kettengelenks, ebenso wie auf der radial innen gelegenen Seite des in Antriebsdrehrichtung vorauseilenden Kettengelenks desselben Außenlaschenglieds, können dagegen die mechanisch weniger stark belasteten und damit auch weniger stark einem Verschmutzungsrisiko ausgesetzten Ränder der ebenen Flächen mit geringerem radialem Überstand oder deckungsgleich mit dem Außenrand der benachbarten Innenlaschen-Endbereiche ausgebildet sein. An der bezüglich des betrachteten Außenlaschen-Zwischenraums vorauseilenden Kettenrolle wird einem Ritzelzahn auf der radial inneren Seite des Kettenrings folglich ein vergrößerter Eintrittsbereich in den Zwischenraum bereitgestellt.

Somit kann die Außenlasche entsprechend der obigen Erläuterungen derart ausgebildet sein, dass dem abschnittsweise geradlinigen Randbereichsabschnitt in Längsrichtung ein gekrümmter Randbereichsabschnitt der jeweils anderen ebenen Fläche gegenüberliegt. Vorzugsweise gilt umgekehrt für den gekrümmten Bereich des Randes derselben ebenen Fläche das Entsprechende, also das diesem in Längsrichtung ein geradliniger Abschnitt eines Randes der anderen ebenen Fläche gegenüberliegt.

Grundsätzlich ist es für ein erleichtertes Einführen eines Ritzelzahns in den Außenlaschen-Zwischenraum vorteilhaft, wenn in einem ersten Breitenbereich der Außenlasche, welcher sich ausgehend von der Verbindungsgerade parallel zur Breitenrichtung bis zur Längsmitte des einen Seitenrands erstreckt, der Abstand zwischen an den Vertiefungsbereich angrenzenden Randabschnitten der ebenen Flächen im Bereich der Längsmitte des einen Seitenrands maximal ist. Für eine erleichterte Herstellung eines Eingriffs auch eines Rollenzahns mit dem Außenlaschen-Zwischenraum, wobei der Rollenzahn in Breitenrichtung, verglichen mit einem Ritzelzahn, aus entgegengesetzter Richtung in den Außenlaschen-Zwischenraum eintritt, kann es daher vorteilhaft sein, wenn in einem zweiten Breitenbereich der Außenlasche, welcher sich ausgehend von der Verbindungsgerade parallel zur Breitenrichtung in entgegengesetzter Richtung bis zur Längsmitte des anderen Seitenrands erstreckt, der Abstand zwischen an den Vertiefungsbereich angrenzenden Randabschnitten der ebenen Flächen im Bereich der Längsmitte des anderen Seitenrands maximal ist. Zu Erleichterung der Montage einer solchen Außenlasche bei einer Herstellung einer Fahrradkette sind bevorzugt die maximalen Abstände im ersten und im zweiten Breitenbereich betragsmäßig gleich groß.

Zu Erleichterung einer passgenauen Anordnung von Außenlasche und Innenlasche bei der Herstellung einer Fahrradkette ist bevorzugt jede der Verbindungsöffnungen der Außenlasche auf der Innenseite radial innerhalb der sie umgebenden ebenen Fläche von einem in Dickenrichtung über die jeweilige ebene Fläche vorstehenden Vorsprung umgeben. Dieser Vorsprung ragt an der fertigen Fahrradkette bevorzugt in die oben genannte Vertiefung auf der Außenseite einer Innenlasche ein und definiert so die relative Lage von Außenlasche und Innenlasche bezüglich ihrer zur Bildung eines Kettengelenks jeweils fluchtenden Verbindungsöffnungen. Bevorzugt ist der Vorsprung in Richtung von der jeweiligen ebenen Fläche weg verjüngend ausgebildet, sodass er, insbesondere im Zusammenwirken mit einer sich in Dickenrichtung in die Innenlasche hinein verjüngenden Vertiefung, eine zentrierende Wirkung entfalten kann. Bevorzugt ist der Vorsprung kegelstumpfförmig.

Dann, wenn die Außenlasche einen nicht-spiegelsymmetrischen Vertiefungsbereich aufweist, ist zur Erleichterung ihrer Montage bevorzugt dennoch vorgesehen, dass die Innenseite oder/und die Außenseite, vorzugsweise die gesamte Außenlasche, bezüglich einer die Verbindungsgerade in ihrer Längsmitte schneidenden, in Dickenrichtung verlaufenden Symmetrieachse punktsymmetrisch ist. Jede an der Außenlasche vorhandene Symmetrie beseitigt eine Möglichkeit einer Fehlanordnung der Außenlasche an der Fahrradkette.

Daher ist es zur erleichterten Montage der Außenlasche mit erheblich verringertem Fehlerrisiko besonders bevorzugt, dass die Innenseite oder/und die Außenseite, vorzugsweise die gesamte Außenlasche, sowohl bezüglich einer die Verbindungsgerade in ihrer Längsmitte orthogonal schneidenden ersten Symmetrieebene, als auch bezüglich einer in Dickenrichtung verlaufenden und die Verbindungsgerade enthaltenden zweiten Symmetrieebene spiegelsymmetrisch ist.

Die vorliegende Erfindung betrifft außerdem einen Kettenring, umfassend eine geschlossen umlaufende Fahrradkette mit in Umlaufrichtung alternierend aufeinander folgenden Außen- und Innenlaschengliedern, wobei die Innenlaschenglieder aus zwei, wie oben beschrieben, asymmetrischen Innenlaschen gebildet sind oder/und wobei die Außenlaschenglieder aus zwei wie oben beschrieben ausgebildeten Außenlaschen gebildet sind. Auch ein solcher Kettenring verkörpert die mit der vorliegenden Erfindung verknüpften technischen Vorteile und löst aufgrund der Verwendung der oben vorgestellten Laschen die eingangs genannte Aufgabe.

Wie oben bereits ausführlich erläutert wurde, dient vor allem die oben beschriebene asymmetrische Innenlasche zur Bildung bevorzugter Innenlaschenglieder, die mit ihrem einen Seitenrand einen äußerst vorteilhaften Kämmungseingriff mit einem Ritzel einer Hinterrad-Ritzelkassette ermöglichen und die mit ihrem in Breitenrichtung jeweils entgegengesetzten Seitenrand einen besonders vorteilhaften Eingriff mit einer Kettenführungsrolle eines Schaltwerks ermöglichen. Innenlaschenglieder aus Innenlaschen, deren beide Seitenrandabschnitte von der Verbindungsgerade in Breitenrichtung einen unterschiedlich großen Abstand aufweisen, sind zur Erzielung der genannten vorteilhaften Eingriffssituationen sowohl mit Ritzeln als auch mit der Kettenführungsrolle derart am Kettenring angeordnet, dass die Seitenrandabschnitte mit dem größeren Abstand von der Verbindungsgeraden am Kettenring radial außen liegen sind. Denn die radial äußere Seite des Kettenrings ist bei einem Umlauf des Kettenrings an einem Fahrrad einem Körper der Kettenführungsrolle näher gelegen, während die radial innere Seite des Kettenrings bei diesem Umlauf einem Körper des kämmenden Ritzels der Hinterrad-Ritzelanordnung näher gelegen ist.

Die vorliegende Erfindung wird nachfolgend anhand der beiliegenden Zeichnungen näher erläutert. Es stellt dar:
- Fig. 1: eine schematische Seitenansicht eines Fahrrads mit einem Kettenring der vorliegenden Anmeldung, welcher Innenlaschen oder/und Außenlaschen der vorliegenden Anmeldung verwendet, bei Betrachtung in Richtung parallel zur Hinterradachse,
- Fig. 2: eine schematische Seitenansicht einer Antriebsbaugruppe aus Kettenring, vorderem Kettenblatt, hinterer Ritzelanordnung und hinterem Schaltwerk von Fig. 1, bei Betrachtung in Richtung parallel zur Hinterradachse,
- Fig. 3: eine perspektivische Ansicht eines Kämmungseingriffs des Kettenrings der Fig. 1 und 2 mit dem vorderen Kettenblatt,
- Fig. 4A: eine schematische Aufrissansicht auf eine erste Ausführungsform einer Innenseite einer Innenlasche des Kettenrings der Fig. 1 bis 3, bei Betrachtung in Richtung parallel zur Dickenrichtung T,
- Fig. 4B: eine schematische Unteransicht der Innenlasche von Fig. 4A, bei Betrachtung längs des Pfeils IV-B in Fig. 4A,
- Fig. 4C: eine schematische Draufsicht der Innenlasche von Fig. 4A, bei Betrachtung längs des Pfeils IV-C in Fig. 4A,

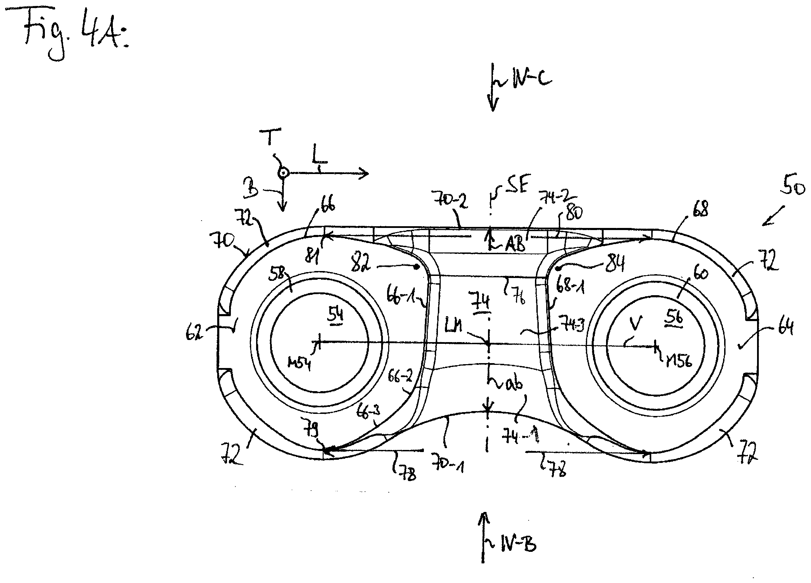

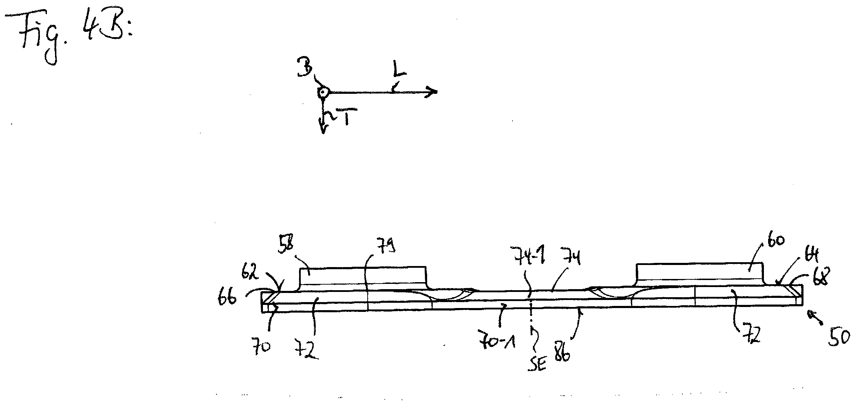

- Fig. 4B: eine schematische perspektivische Ansicht der Außenseite der Innenlasche von Fig. 4A,

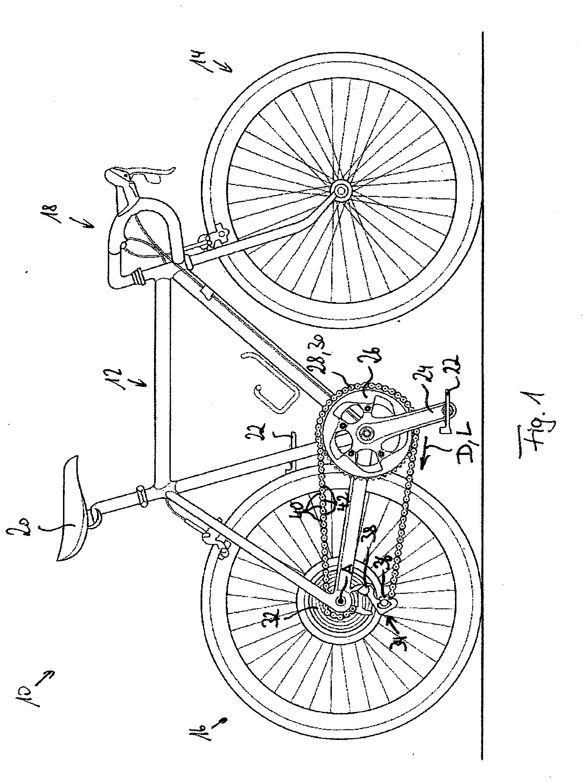

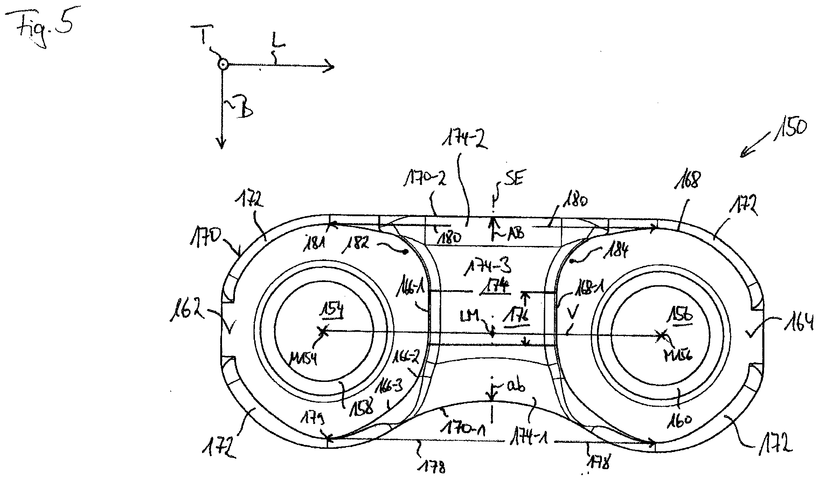

- Fig. 5: eine schematische Aufrissansicht auf eine zweite Ausführungsform einer Innenseite einer Innenlasche des Kettenrings der Fig. 1 bis 3, bei Betrachtung in Richtung parallel zur Dickenrichtung T,

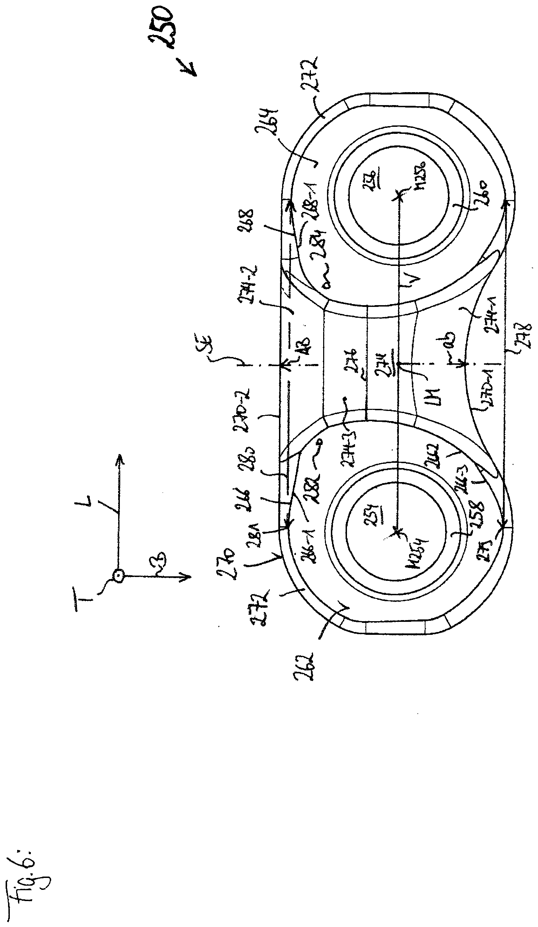

- Fig. 6: eine schematische Aufrissansicht auf eine dritte Ausführungsform einer Innenseite einer Innenlasche des Kettenrings der Fig. 1 bis 3, bei Betrachtung in Richtung parallel zur Dickenrichtung T,

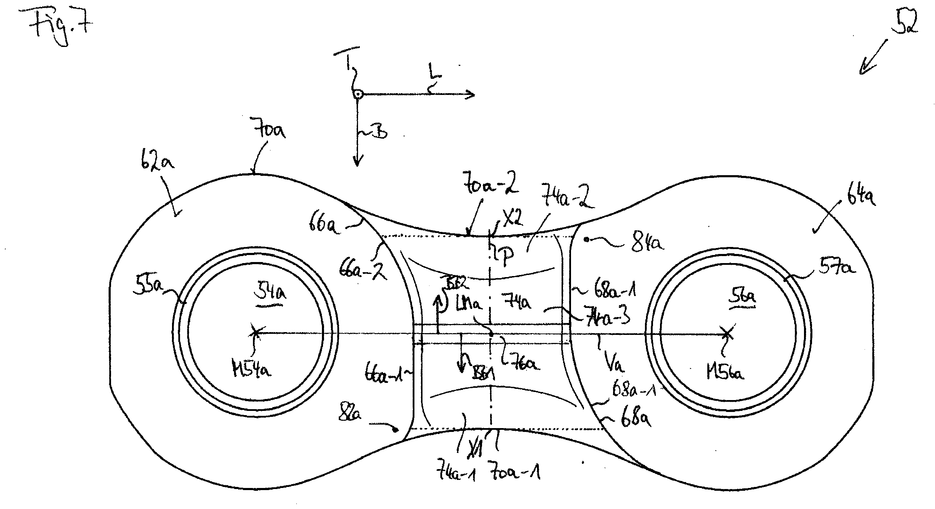

- Fig. 7: eine schematische Aufrissansicht auf eine erste Ausführungsform einer Innenseite einer Außenlasche des Kettenrings der Fig. 1 bis 3, bei Betrachtung in Richtung parallel zur Dickenrichtung T, und

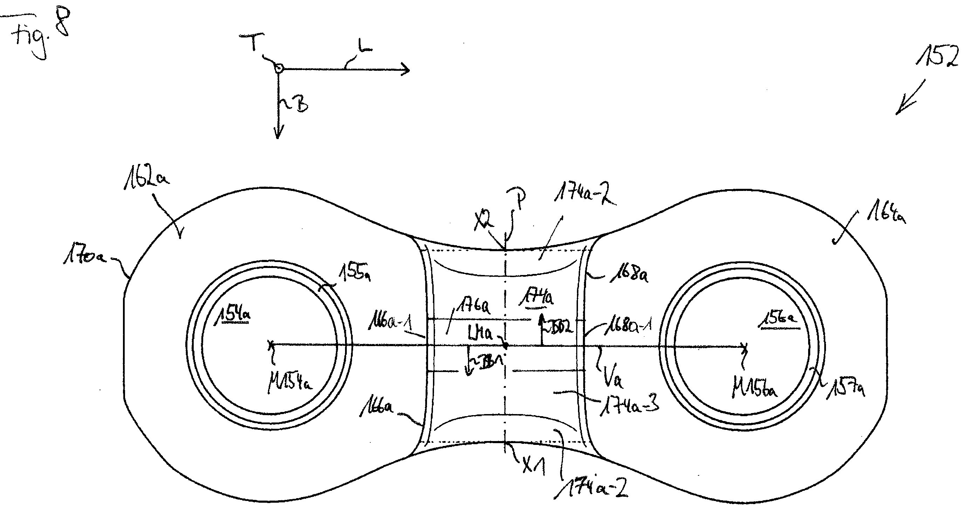

- Fig. 8: eine schematische Aufrissansicht auf eine zweite Ausführungsform einer Innenseite einer Außenlasche des Kettenrings der Fig. 1 bis 3, bei Betrachtung in Richtung parallel zur Dickenrichtung T.

In Figur 1 ist ein Fahrrad allgemein mit 10 bezeichnet. Das Fahrrad 10 umfasst einen Fahrradrahmen 12 mit einem Vorderrad 14, einem Hinterrad 16, einem Lenker 18 und einem Sattel 20. Wie bei Fahrrädern üblich, ist am Fahrrad 10 über Pedale 22 und Kurbeln 24 ein Drehmoment in ein vorderes Kettenblatt 26 einleitbar, welches über eine als Kettenring 28 geschlossen umlaufende Fahrradkette 30 zu einer mehrfach-Ritzelanordnung 32 am Hinterrad 16 übertragen wird. Bei Vorwärtsfahrt läuft die Fahrradkette 30 in Figur 1 im Uhrzeigersinn längs der Antriebsdrehrichtung D um.

Das jeweils mit der Fahrradkette 30 kämmende Ritzel der mehrfach-Ritzelanordnung 32 am Hinterrad 16 kann in an sich bekannter Weise durch ein längs der Hinterradachse A bewegliches Schaltwerk 34 ausgewählt werden. Dabei soll dies nicht bedeuten, dass das Schaltwerk 34 nur längs der Hinterradachse A beweglich ist. Es ist vielmehr auch längs der Hinterradachse A beweglich.

Das Schaltwerk 34 umfasst eine weiter von der Ritzelanordnung 32 entfernt gelegene Kettenspannrolle 36, welche dafür sorgt, dass am Kettenring 28 kein schlaffes Trum gebildet wird. Das Schaltwerk 34 umfasst weiter eine näher bei der Ritzelanordnung 32 gelegene Kettenführungsrolle 38, welche die Kette 30 bzw. den Kettenring 28 bezüglich der Ritzelanordnung 32 längs der Hinterradachse A positioniert.

Die Fahrradkette 30 ist in an sich bekannter Weise gebildet durch eine Mehrzahl von in Kettenlängsrichtung L aufeinanderfolgende Außenlaschenglieder 40, zwischen welchen jeweils ein Innenlaschenglied 42 angeordnet ist, das die Außenlaschenglieder 40 miteinander verbindet.

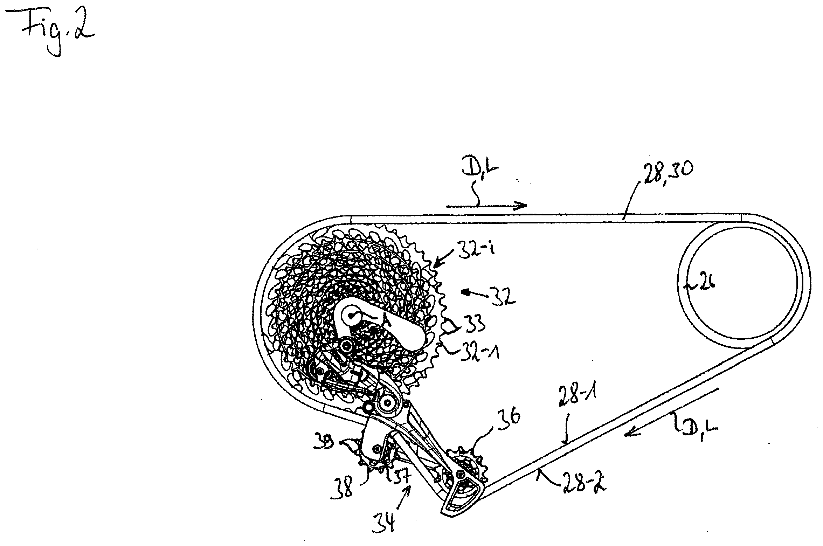

In Figur 2 sind das vordere Kettenblatt 26 und der Kettenring 28 lediglich grobschematisch dargestellt. Dafür sind das Schaltwerk 34 und die Ritzelanordnung 32 detaillierter dargestellt als in Figur 1.

Die Ritzelanordnung 32 ist im dargestellten Beispiel eine 11-fach-Ritzelanordnung 32 mit 11 koaxialen Ritzeln 32-i, mit i = 1 bis 11. In Figur 2 kämmt die Fahrradkette 30 mit dem durchmessergrößten Ritzel 32-1. Von jedem der Ritzel 32-i stehen bezüglich der Hinterradachse A Ritzelzähne 33 nach radial außen vor. An der Kettenführungsrolle 38 sind Rollenzähne 39 ausgebildet, die, bezogen auf die Drehachse der Kettenführungsrolle 38, radial von einem Rollenkörper 37 der Kettenführungsrolle 38 vorstehen. Abweichend von der schematischen Darstellung von Figur 2 können die Ritzelzähne 33 eine größere Zahnhöhe aufweisen als die Rollenzähne 39.

Der umlaufende Kettenring 28 weist eine radial innere Seite 28-1 auf und weist eine radial äußere, weiter von der vom Kettenring 28 umschlossenen Fläche entfernte Seite 28-2 auf. Wie in Figur 2 zu erkennen ist, kämmen das vordere Kettenblatt 26, die Ritzel 32-i und die Spannrolle 36 derart mit dem umlaufenden Kettenring 28, dass ihre Zähne jeweils von der radial inneren Seite 28-1 des Kettenrings 28 in die Zwischenräume der Laschenglieder 40 und 42 eingreifen. Die Zähne 39 der Kettenführungsrolle 38 hingegen treten in die Zwischenräume der Laschenglieder 40 und 42 von der radial äußeren Seite 28-2 her ein.

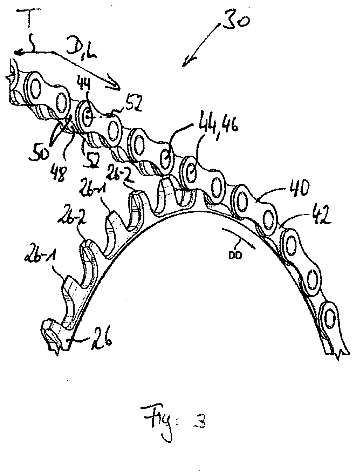

In Figur 3 ist zur weiteren Erläuterung ein Kämmungseingriff der Fahrradkette 30 mit dem vorderen Kettenblatt 26 dargestellt. Das Kettenblatt 26 wird vom Fahrradfahrer über die Pedale 22 und die Kurbeln 24 in Drehrichtung DD angetrieben, wodurch nacheinander Zähne 26-1 und 26-2 in Eingriff mit Außenlaschengliedern 40 und Innenlaschengliedern 42 treten. Die Zähne 26-1 sind jeweils gleichartig ausgeformt, ebenso die Zähne 26-2. Die Zähne 26-1 sind dabei dünner ausgebildet als die Zähne 26-2 des Kettenblatts 26. Dementsprechend sind die Zähne 26-1 zum Eingriff in den schmäleren Innenlaschen-Zwischenraum vorgesehen und die Zähne 26-2 zum Eingriff in den breiteren Außenlaschen-Zwischenraum.

Die Außenlaschenglieder 40 und die Innenlaschenglieder 42 sind jeweils über einen Verbindungsbolzen 44 miteinander verbunden, wobei unmittelbar durch einen Verbindungsbolzen 44 miteinander verbundene Laschenglieder 40 und 42 um den Verbindungsbolzen 44 herum abwinkelbar sind und somit am Verbindungsbolzen 44 ein Kettengelenk 46 bilden. Ein Kettengelenk 46 umfasst in Dickenrichtung T der Laschenglieder 40 und 42 bzw. der Fahrradkette 30 eine zentrale, drehbare Kettenrolle 48, welche in Dickenrichtung T zu beiden Seiten von je einer Innenlasche 50 eingefasst ist. Die beiden Innenlaschen 50 eines Innenlaschenglieds 42 sind in Dickenrichtung T wiederum jeweils auf ihrer von der Kettenrolle 48 abgewandten Seite einer Außenlasche 52 benachbart. Die beiden Außenlaschen 52 eines Außenlaschenglieds 40 sind vorzugsweise bezüglich einer zur Dickenrichtung T orthogonalen Spiegelebene spiegelsymmetrisch ausgebildet und angeordnet. Ebenso sind die Innenlaschen 50 eines Innenlaschenglieds 42 vorzugsweise bezüglich der genannten Spiegelebene spiegelsymmetrisch ausgebildet und angeordnet.

Die in Figur 3 gezeigte Fahrradkette 30 gibt diese nur grobschematisch wieder. Details der Ausgestaltung der Laschen 50 und 52 sind in den nachfolgenden Figuren erläutert.

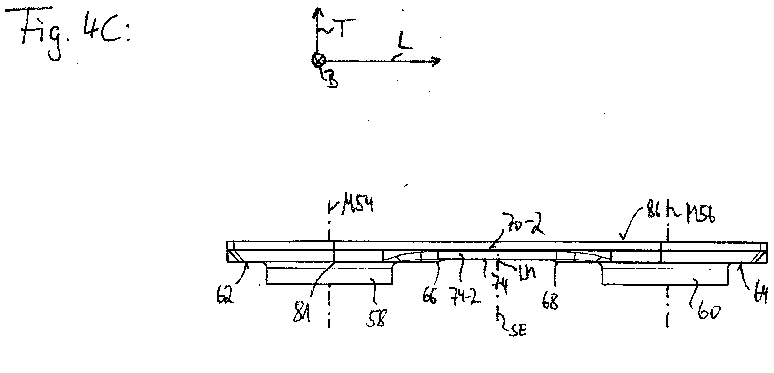

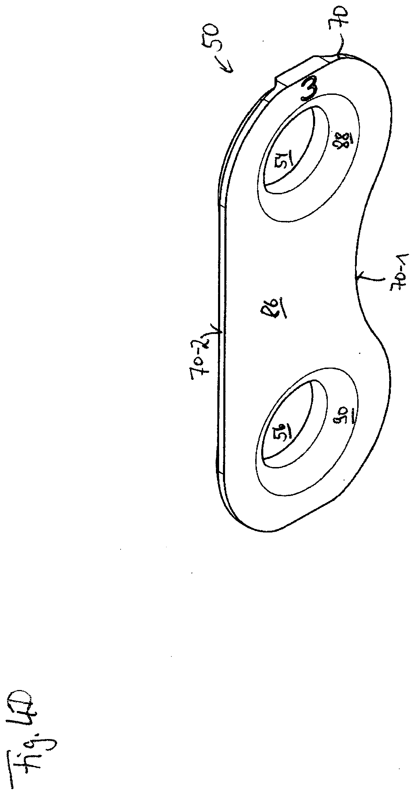

Figuren 4A bis 4D zeigen eine erste Ausführungsform einer Innenlasche 50 der vorliegenden Erfindung. Dabei zeigt Figur 4A eine Draufsicht auf eine im Innenlaschenglied 42 einer entgegengesetzten gleichartigen Innenlasche 50 zugewandte Innenseite bei Betrachtung dieser Innenseite längs der Dickenrichtung T. Figur 4B zeigt eine Ansicht der Innenlasche 50 längs der Breitenrichtung B, bei Betrachtung der die radial innere Seite 28-1 des Kettenrings 28 bildenden Seite der Innenlasche 50 längs des Pfeils IV-B von Fig. 1. Figur 4C zeigt eine Ansicht der Innenlasche 50 ebenfalls längs der Breitenrichtung B, jedoch aus entgegengesetzter Richtung wie in Figur 4B, also bei Betrachtung der die radial äußeren Seite 28-2 des Kettenrings 28 bildenden Seite der Innenlasche 50 längs des Pfeils IV-C von Fig. 1. Figur 4D zeigt eine perspektivische Ansicht der der Innenseite von Figur 4A in Dickenrichtung T entgegengesetzten Außenseite.

Figur 4A zeigt zwei Verbindungsöffnungen 54 und 56, welche im fertig montierten Zustand der Fahrradkette 30 bzw. des Kettenrings 28 jeweils von einem Verbindungsbauteil in beispielhafter Gestalt eines Verbindungsbolzen 44 durchsetzt sind. Mit M54 und M56 sind die Verbindungsöffnungen 54 bzw. 56 zentral durchsetzende parallel zur Dickenrichtung T verlaufende Mittelachsen bezeichnet. Eine die beiden Mittelachsen M54 und M56 verbindende, zu beiden Mittelachsen M54 und M56 orthogonale Verbindungsgerade V bildet eine Bezugsgerade bei der Beschreibung der Innenlasche 50. Die Verbindungsgerade V definiert eine Längsrichtung L der Innenlasche 50, die an der fertig montierten Fahrradkette 30 stets mit der lokalen Längsrichtung L der Fahrradkette 30 zusammenfällt.

Die Verbindungsgerade V reicht von der Mittelachse M54 bis zur Mittelachse M56. Da die Innenlasche 50 zu einer die Verbindungsgerade V in ihrer Längsmitte LM orthogonal schneidenden Ebene SE spiegelsymmetrisch ausgebildet ist, reicht die Beschreibung einer Hälfte der Innenlasche 50 aus. Die jeweils andere Hälfte ergibt sich aus der genannten Spiegelsymmetriebedingung.

Jede der Verbindungsöffnungen 54 und 56 ist von je einem hülsenartigen Kragen 58 bzw. 60 umgeben, der am fertigen Innenlaschenglied 42 einen Teil einer Achse bildet, welche die der jeweiligen Verbindungsöffnung zugeordnete Kettenrolle 48 drehbar lagert. Jeder hülsenartige Kragen 58 bzw. 60 ist von einer ebenen Fläche 62 bzw. 64 umgeben, an welcher die der jeweiligen Verbindungsöffnung 54 bzw. 56 zugeordnete Kettenrolle 48 mit ihrer vorzugsweise ebenfalls ebenen Stirnseite anliegt oder dieser wenigstens gegenüberliegt.

Die ebene Fläche 62 ist durch einen Rand 66 nach radial außen begrenzt, die ebene Fläche 64 durch einen Rand 68. Die Ränder 66 und 68 können sich näher bei den jeweiligen umgebenden Verbindungsöffnungen 54 bzw. 56 befinden als ein Rand 70 der Innenlasche 50, da zwischen dem Rand 70 der Innenlasche 50 und den Rändern 66 und 68 der ebenen Flächen 62 bzw. 64 Anfasungen 72 befinden können.

Zwischen den Verbindungsöffnungen 54 und 56 erstrecken sich auf der dem radial inneren Rand 28-1 des Kettenrings 28 zugeordneten Seite ein Seitenrandabschnitt 70-1 des Innenlaschenrands 70 sowie auf der dem radial äußeren Rand 28-2 des Kettenrings 28 zugeordneten Seite ein Seitenrandabschnitt 70-2 des Innenlaschenrands 70.

Die Seitenrandabschnitte 70-1 und 70-2 sind in Breitenrichtung B unterschiedlich weit von der Verbindungsgerade V entfernt. Im Zweifelsfall ist die Entfernung eines Seitenrandabschnitts als Abstand von der Längsmitte LM der Verbindungsgeraden V zu ermitteln. Von dieser ist der bei Betrachtung der radial inneren Seite 28-1 des Kettenrings 28 konkave Seitenrandabschnitt 70-1 den kürzeren Abstand "ab" von der Längsmitte LM der Verbindungsgerade V entfernt. Der entgegengesetzte Seitenrandabschnitt 70-2 ist dagegen den größeren Abstand "AB" von der Längsmitte LM der Verbindungsgeraden V entfernt.

Im Bereich zwischen den ebenen Flächen 62 und 64 ist ein Vertiefungsbereich 74 ausgebildet, welcher bezüglich den ebenen Flächen 62 und 64 zur Außenseite der Innenlasche 50 hin zurückgesetzt ist. Die ebenen Flächen 62 und 64 liegen dagegen in einer gemeinsamen Ebene. Der Vertiefungsbereich 74 bildet zusammen mit dem Vertiefungsbereich 74 der entgegengesetzten Innenlasche 50 eines Innenlaschenglieds 42 einen wesentlichen Teil eines Innenlaschen-Zwischenraums.

Am Seitenrandabschnitt 70-1 vorbei tritt ein Ritzelzahn 33 in den Innenlaschen-Zwischenraum im Bereich des Vertiefungsabschnitts 74 ein. Am Seitenrandabschnitt 70-2 vorbei tritt ein Rollenzahn 39 der Kettenführungsrolle 38 in den Innenlaschen-Zwischenraum im Bereich des Vertiefungsabschnitts 74 ein. Der Ritzelzahn 33 hat dabei unabhängig davon, an welchem Ritzel 32-i er ausgebildet ist, in der Regel eine größere Zahnhöhe als ein Rollenzahn 39.

Um selbst bei kürzerer Zahnhöhe eines Rollenzahns 39 ein Innenlaschenglied 42 an der Führungsrolle 38 gut führen zu können, obwohl die Fahrradkette 30 in Dickenrichtung T der Kettenlaschen nur eine sehr geringe Abmessung aufweist, ist der Seitenrandabschnitt 70-2 geradlinig ausgebildet und weiter von der Verbindungsgeraden V entfernt als der entgegengesetzte Seitenrandabschnitt 70-1. Somit kann auch bei kurzer Zahnhöhe eines Rollenzahns 39 eine große Überlappung in Breitenrichtung B zwischen dem Rollenzahn 39 und der Innenlasche 50 erzielt werden. Außerdem kann der geradlinige und vorzugsweise zur Verbindungsgerade V parallele Seitenrandabschnitt 70-2 als Tangente an einer kegelförmigen Mantelfläche eines häufig als Doppelkegelstumpf ausgebildeten Rollenkörpers 37 der Kettenführungsrolle 38 anliegen. Der Rollenkörper 37 verjüngt sich dabei in der Regel von der Ebene der Rollenzähne 39 axial zu beiden entgegengesetzten Seiten. Somit kann jeder Seitenrandabschnitt 70-2 von zwei ein Innenlaschenglied 42 bildenden Innenlaschen 50 an einem anderen Kegelstumpf des Rollenkörpers 37 anliegen.

Mit dem Bezugszeichen 76 ist der Ort des in Längsrichtung L geringsten Abstands zwischen den Rändern 66 und 68 der ebenen Flächen 62 und 64 bezeichnet. Dieser Ort 76 des Minimalabstandswerts zwischen den Rändern 66 und 68 der beiden ebenen Flächen 62 und 64 und damit zwischen den ebenen Flächen 62 und 64 ist in Breitenrichtung B dem Seitenrandabschnitt 70-2 näher gelegen als der Verbindungsgerade V. Dadurch kann vom Seitenrandabschnitt 70-1 her ein Ritzelzahn 33 mit vergleichsweise hoher Zahnhöhe in den vom Vertiefungsbereich 74 maßgeblich bereitgestellten Innenlaschen-Zwischenraum eindringen und wird über seine vollständige Zahnhöhe nicht nur optimal in den Innenlaschen-Zwischenraum hinein geführt, sondern im Innenlaschen-Zwischenraum nahezu formschlüssig gehalten. Die Kette 30 ist somit durch ein Innenlaschenglied 42 sehr gut an einem Ritzel 32-i geführt und kann optimal Kraft und damit Drehmoment auf die Ritzelanordnung 32 und somit auf das Hinterrad 16 übertragen.

In Breitenrichtung B nimmt beiderseits des Orts 76 des Minimalabstandswerts zwischen den ebenen Flächen 62 und 64 der Abstand in Längsrichtung zwischen den ebenen Flächen 62 und 64 wieder zu. Ein Ort größten Abstands der ebenen Flächen 62 und 64 in Längsrichtung L voneinander ist im dargestellten Beispiel auf jeder Seite der Verbindungsgerade V jeweils dort vorhanden, wo eine in Längsrichtung verlaufende Abstandsgerade tangential an den beiden Rändern 66 und 68 anliegt. Dies sind der Ort 78 eines Maximalabstandswert auf Seiten des Seitenrandabschnitts 70-1 sowie der Ort 80 eines Maximalabstandswert auf Seiten des Seitenrandabschnitts 70-2. Bevorzugt sind diese Maximalabstandswerte an den Orten 78 und 80 betragsmäßig gleich groß. Ebenso können die Orte 78 und 80 der Maximal abstandswerte in Breitenrichtung B gleich weit von der Verbindungsgerade V entfernt sein. Folglich ist der Ort 76 des Minimalabstandswerts auch von den Orten 78 und 80 der Maximalabstandswerte unterschiedlich weit entfernt. Auch dies unterstützt die Verbesserung der Kettenführung durch Innenlaschenglieder 42 an Ritzeln 32-i einerseits und an der Kettenführungsrolle 38 andererseits. Der Preis dieser verbesserten Führung der Innenlaschenglieder 42 an den Ritzeln 32-i und an der Kettenführungsrolle 38 ist die Asymmetrie der Innenlaschen 50 in Breitenrichtung B.

Der Rand 66 und der Rand 68 der ebenen Flächen 62 bzw. 64 weisen jeweils einen geradlinigen Abschnitt 66-1 bzw. 68-1 auf, welche sich in Längsrichtung L wegen der oben genannten Spiegelsymmetrie der Innenlasche 50 gegenüberliegen. Die geradlinigen Randbereiche 66-1 und 68-1 divergieren vom Ort 76 des Minimalabstandswerts zum Seitenrandabschnitt 70-1 hin. Dadurch wird der Vertiefungsbereich 44 in seiner Erstreckung in Längsrichtung und in Breitenrichtung der Form eines sich zum Zahnkopf hin üblicherweise verjüngenden Ritzelzahns 33 angenähert.

Somit können im Bereich des Minimalabstandswerts 76 Zonen 82 bzw. 84 eines radialen Überstands der ebenen Fläche 62 bzw. der ebenen Fläche 64 über den zylindrischen Außenmantel der den ebenen Flächen 62 und 64 jeweils benachbarten Kettenführungsrolle 84 erzielt werden.

Von dem dem Seitenrandabschnitt 70-1 nächstgelegenen Ort 79 größter Entfernung des Randes 66 von dem Rand 68 der in Längsrichtung L auf der gegenüberliegenden Seite des Vertiefungsbereichs 74 gelegenen ebenen Fläche 64 bis zu dem dem Seitenrandabschnitt 70-2 nächstgelegenen Ort 81 größter Entfernung vom Rand 68 wechseln sich Randbereiche stärkerer Krümmung (mit kleinerem Krümmungsradius) mit Randbereichen geringerer Krümmung (mit größerem Krümmungsradius) ab. Geradlinige Bereiche gelten dabei als Randbereiche mit Krümmung 0. also mit unendlich großem Krümmungsradius. Im Bereich 82 des radialen Überstands ist dabei der Rand 66 am stärksten gekrümmt, was den radialen Überstand mit stufen- und knickfreier Berandung ermöglicht. In den Punkten 79 und 81 ist die Krümmung des Randes 66 jeweils größer als in den unmittelbar zum Vertiefungsbereich 74 hin benachbarten Randbereichen. Vom Punkt 79 ausgehend zum geradlinigen Bereich 66-1 hin folgt zunächst ein schwächer gekrümmter Bereich 66-3, wiederum gefolgt von einem stärker gekrümmten Bereich 66-2, welcher schließlich in den geradlinigen Bereich 66-1 mündet. Für den Rand 68 gilt wegen der erwähnten Spiegelsymmetrie das Entsprechende.

Wie Figur 4D zeigt, weist die Außenseite der Innenlasche 50 eine ebene Fläche 86 auf, welche sich zum einen im Längsabschnitt zwischen den Verbindungsöffnungen 54 und 56 erstreckt und welche jede der Verbindungsöffnungen 54 und 56 umgibt. Bevorzugt ist die ebene Fläche 86 auf der Außenseite der Innenlasche 50 eine durchgehend zusammenhängende ebene Fläche 86. Die jeweiligen Verbindungsöffnungen 54 und 56 unmittelbar umgebend, sind auf der Außenseite der Innenlasche 50 negativ-kegelstumpfförmige Einsenkungen bzw. Vertiefungen 88 bzw. 90 ausgebildet.

Dabei ist vorteilhaft das beim Umformen eines Blechs zur Innenlasche 50 im Bereich der Vertiefungen 88 und 90 verdrängte Material zur Bildung der hülsenartigen Krägen 58 und 60 verwendet worden. Die Vertiefungen 88 und 90 nehmen an der fertigen Fahrradkette 30 entsprechende Vorsprünge an Innenseiten von Außenlaschen 52 auf, die, vorteilhafterweise positiv-kegelstumpfförmig ausgebildet, die an Außenlaschen 52 zur Aufnahme der Verbindungsbolzen 54 ebenfalls vorhandenen Verbindungsöffnungen bezüglich der Achsen M54 und M56 zentrieren. Die Achsen M54 und M56 sind gleichzeitig Gelenkachsen der durch die jeweiligen Verbindungsbolzen 44 gebildeten Kettengelenke 46, weshalb die Zentrierung von Innenlaschen 50 und Außenlaschen 52 bezüglich dieser Achsen M54 und M56 besonders vorteilhaft ist.

Der Vertiefungsbereich 74 kann in einem die Verbindungsgerade V enthaltenden Breitenbereich 74-3 eben und bevorzugt parallel zur ebenen Fläche 86 der Außenseite ausgestaltet sein. In daran anschließenden Breitenbereichen 74-1 und 74-2 zum Seitenrandabschnitt 70-1 bzw. 70-2 hin kann der Vertiefungsbereich 74 dagegen als Einführhilfe für einen Ritzelzahn 33 (Breitenbereich 74-1) oder für einen Rollenzahn 39 (Breitenbereich 74-2) zum jeweiligen Seitenrandabschnitt hin abfallend abgeschrägt oder ballig konvex gekrümmt ausgeformt sein. Wegen der möglichen unterschiedlichen Zahnhöhen weist bevorzugt der dem Ritzelzahn 33 zugeordnete Breitenbereich 74-1 des Vertiefungsbereichs 74 als Einführhilfe in Breitenrichtung B eine größere Abmessung auf als der einem Rollenzahn 39 als Einführhilfe zugeordnete Breitenbereich 74-2.

In Figur 5 ist eine zweite Ausführungsform einer Innenlasche der vorliegenden Erfindung bei Betrachtung der Innenseite längs der Dickenrichtung T als Betrachtungsrichtung dargestellt. Gleiche und funktionsgleiche Bauteile und Bauteilabschnitte wie an der Innenlasche der ersten Ausführungsform sind in Figur 5 mit gleichen Bezugszeichen versehen, jedoch erhöht um die Zahl 100.

Die zweite Ausführungsform einer Innenlasche 150 von Figur 5 wird nachfolgend nur insofern erläutert werden, als sie sich von der Ausgestaltung der ersten Ausführungsform unterscheidet, auf deren Beschreibung ansonsten auch zu Erläuterung der zweiten Ausführungsform verwiesen wird.

Die Ausführungsform der Innenlasche 150 von Figur 5 entspricht bis auf ein Detail der Innenlasche 50 der Figuren 4A bis 4D: der Ort 176, an welchem der Abstand in Längsrichtung L zwischen den ebenen Flächen 162 und 164 minimal ist, ist nicht nur eine punktförmige Koordinate in Breitenrichtung B ohne nennenswerte Breitenabmessung, sondern ist ein Bereich 176, in welchem sich der Minimalabstandswert nicht ändert. Dieser Bereich 176 erstreckt sich derart in Breitenrichtung B, dass er die Verbindungsgerade V enthält, wobei der Abstand der parallelen, in Längsrichtung L verlaufenden Bereichsränder von der Verbindungsgerade V unterschiedlich groß ist. So hat der dem Seitenrandabschnitt 170-1 näher gelegene Bereichsrand einen erheblich kürzeren Abstand von der Verbindungsgerade V als der dem entgegengesetzten Seitenrandabschnitt 170-2 näher gelegene Bereichsrand. Die Abstände können sich wie 1 zu 2 oder mehr, vorzugsweise wie 1 zu 3 oder mehr verhalten. Somit erstreckt sich auch in der Ausführungsform von Figur 5 der Ort eines Minimalabstandswerts zwischen den beiden ebenen Flächen 162 und 164 bzw. zwischen ihren jeweiligen Rändern 166 und 168 bis zu einem Ort, welcher von der Verbindungsgerade V entfernt gelegen ist. In Breitenrichtung B beiderseits des Minimalabstandswertebereichs 176 weisen die ebenen Flächen 162 und 164 größere Längsabstände voneinander auf als im Bereich 176. Die Orte 178 und 180 von Maximalabstandswerten auf jeder Seite der Verbindungsgeraden V liegen wieder dort, wo die jeweilige Abstandsgerade tangential an den Rändern 166 und 168 anliegt.

Die geradlinigen Randabschnitte 166-1 und 168-1 in der zweiten Ausführungsform der Innenlasche 150 verlaufen über den Bereich 176 hinweg in Breitenrichtung B parallel zueinander. Das dem Seitenrandabschnitt 170-2 näher gelegene Ende in Breitenrichtung B des Minimalabstandswertebereichs 176 liegt weiter vom Seitenrand 170-2 entfernt als dies für den Ort 76 der ersten Ausführungsform der Innenlasche 50 von Figur 4A der Fall ist. Die Bereiche radialen Überstands 182 und 184 über die zylindrische Außenfläche der den jeweiligen ebenen Flächen 162 und 164 gegenüberliegenden Kettenrollen 148 sind daher weniger stark ausgeprägt als in der Ausführungsform der Figur 4A.

Wie bereits in der Ausführungsform der Innenlasche 50 von Figur 4A zu erkennen ist, schließen sich in Breitenrichtung B beiderseits der geradlinigen Randbereiche 166-1 168-1 gekrümmte Randbereiche an, welche längs ihres Verlaufs unterschiedliche Krümmungsradien aufweisen.

In Figur 6 ist eine dritte Ausführungsform einer erfindungsgemäßen Innenlasche dargestellt. Zu sehen ist in Figur 6 - ebenso wie in Figur 4A und in Figur 5 - eine Draufsicht der Innenseite der Innenlasche 250 bei deren Betrachtung in Dickenrichtung T.

Gleiche und funktionsgleiche Bauteile und Bauteilabschnitte wie in den Figuren 4A und 5 sind in Figur 6 mit gleichen Bezugszeichen versehen, jedoch erhöht um die Zahl 200 bzw. 100. Die dritte Ausführungsform von Figur 6 wird nachfolgend nur insofern erläutert werden, als sie sich von den vorhergehenden Darstellungen gleicher Perspektive der Figuren 4A und 5 unterscheidet, auf deren Beschreibung ansonsten auch zu Erläuterung von Figur 6 ausdrücklich verwiesen sei.

Zunächst ist auffällig, dass die ebenen Flächen 262 und 264 vollständig von einer Anfasung 272 bzw. vom Vertiefungsbereich 274 umschlossen sind und somit keine Bereiche der ebenen Flächen 262 und 264 bis zum Rand 270 der Innenlasche 250 reichen. Die ebenen Flächen 262 und 264 können diesbezüglich jedoch abweichend von der Darstellung von Figur 6 auch wie die ebenen Flächen 62 und 64 bzw. 162 und 164 der vorhergehenden Ausführungsformen ausgebildet sein.

Abweichend von der zweiten Ausführungsform der Innenlasche 150 und in Übereinstimmung mit der ersten Ausführungsform einer Innenlasche 50 ist der Ort 276 größter Annäherung der ebenen Flächen 262 und 264 in Längsrichtung L aneinander eine konkrete Koordinate in Breitenrichtung B und kein ausgedehnter Bereich mit einer nennenswerten Abmessung in Breitenrichtung B. Da der Abstand der ebenen Flächen 262 und 264, ebenso wie der ebenen Flächen 62 und 64 bzw. 162 und 164, gleichbedeutend ist mit dem Abstand der Ränder 266 und 268 in Längsrichtung L voneinander, ist der Ort 276 des Minimalabstandswerts zwischen den ebenen Flächen 262 und 264 auch ein Ort des Minimalabstandswerts zwischen den die jeweiligen ebenen Flächen 262 bzw. 264 bezüglich der jeweiligen Mittelachse M254 und M256 radial außen begrenzen Rändern 266 und 268.

Anders als in den vorhergehenden Ausführungsformen schließen sich an den Ort 276 des Minimalabstandswerts keine geradlinigen Randabschnitte der Ränder 266 und 268 an. Die Ränder 266 und 268 verlaufen dort, wo sie unmittelbar an den Vertiefungsbereich 274 angrenzen, mit gekrümmten Verlauf mit unterschiedlichen Krümmungsradien. Dabei kann gerade im Ort 276 des Minimalabstandswerts der Krümmungsradius der jeweiligen Ränder 266 und 168 bezogen auf parallel zur Breitenrichtung B auf beiden Seiten des Orts 276 nachfolgende Randbereiche maximal sein. Lediglich in einem dem Seitenrandabschnitt 270-2 nahegelegenen Bereich, fern vom Ort 276 des Minimalabstandswerts, verläuft ein Abschnitt 266-1 bzw. 268-1 der Ränder 266 bzw. 168 geradlinig. Auch an dem in Längsrichtung L am weitesten vom Vertiefungsbereichs 174 entfernt gelegenen Abschnitt der Ränder 266 und 268 kann ein abschnittsweise geradliniger Verlauf ausgeformt seien.

Der zentrale Abschnitt 274-3 des Vertiefungsbereichs 274 kann wiederum eben ausgebildet sein oder kann um eine zur Verbindungsgeraden V parallele Krümmungsachse ballig, d. h. in der Draufsicht von Figur 6 konvex, gekrümmt sein. Die abgeschrägten Bereiche 274-1 und 274-2 weisen an der dritten Ausführungsform eine größere Breitenabmessung längs der Breitenrichtung B auf als in den vorhergehenden ersten beiden Ausführungsformen. Wiederum können die Bereiche 274-1 oder/und 274-2 eben ausgebildet sein, dann jedoch bevorzugt in Richtung von der Verbindungsgerade V weg zur Außenseite der Innenlasche zu 150 hin geneigt, oder können ebenfalls ballig ausgebildet sein, gekrümmt um eine zur Verbindungsgeraden V parallele Krümmungsachse, wobei dann der Krümmungsradius der Bereiche 274-1 oder/und 174-2 kleiner ist als jener des ebenen mittleren Abschnitt 274-3 des Vertiefungsbereichs 274.

In Figur 7 ist eine Innenseite einer ersten Ausführungsform einer erfindungsgemäßen Außenlasche 52 dargestellt. Wie die Innenseiten der Innenlaschen 50, 150 und 250 der Figuren 4A, 5 und 6 ist auch die Innenseite der Außenlasche 52 von Figur 7 längs der Dickenrichtung T betrachtet.

Verglichen mit den Innenseiten von Innenlaschen der Figuren 4A, 5 und 6 gleiche und funktionsgleiche Bauteilabschnitte der Außenlasche 52 sind mit gleichen Bezugszeichen wie in Figur 4A bezeichnet, jedoch zusätzlich versehen mit dem Kleinbuchstaben "a". Erläuterungen dieser Bauteilabschnitte im Zusammenhang mit den Innenlaschen 50, 150 und 250 sind wegen ihrer Funktionsgleichheit oder/und Gestaltgleichheit auch auf Bauteilabschnitte gleichen Bezugszeichens an der Außenlasche 52 anwendbar.

Auch die Außenlasche 52 weist Verbindungsöffnungen 54a und 56a auf, welche jeweils von einer ebenen Fläche 62a bzw. 64a umgeben ist. Mittelachsen M54a und M56a, welche die Verbindungsöffnungen 54a bzw. 56a zentral in Dickenrichtung T durchsetzen, sind an der fertig montierten Fahrradkette 30 kollinear mit den entsprechenden Mittelachsen der Verbindungsöffnungen 56 bzw. 54 von Innenlaschen 50. Die Mittelachse M54a der Außenlasche 52 ist dabei kollinear mit einer Mittelachse M56 einer Innenlasche 50. Entsprechend ist die Mittelachse M56a kollinear mit einer Mittelachse M54.

Jede Verbindungsöffnung 54a und 56a ist von einem kegelstumpfförmigen Vorsprung 55a bzw. 57a umgeben, welche an der fertigen Fahrradkette 30 in die negativ-kegelförmigen Vertiefungen 88 bzw. 90 einragen und dort die Außenlasche 52 und die Innenlaschen 50 bezüglich ihrer jeweiligen Mittelachsen koaxial zentrieren.

Den ebenen Flächen 62a und 64a liegt daher jeweils ein Abschnitt der ebenen Fläche 86 der Außenseite einer Innenlasche 50 gegenüber. Genauer liegt jeder ebenen Fläche 62a und 64a ein Abschnitt der ebenen Fläche 86 einer anderen Innenlasche 50 gegenüber.

Zwischen den ebenen Flächen 62a und 64a ist auch auf der Innenseite der Außenlasche 52 ein Vertiefungsbereich 74a gebildet, welcher gegenüber den vorzugsweise komplanaren ebenen Flächen 62a und 64a von der Innenseite weg zur entgegengesetzten Außenseite der Außenlasche 52 hin versetzt ist.

Anders als bei den Innenlaschen 50 sind die ebenen Flächen 62a und 64a der Außenlaschen 52 nicht von einer Anfasung umgeben, sondern reichen bis an den Rand 70a der Außenlasche 52. Die zwischen den Verbindungsöffnungen 54a und 56a liegenden Seitenrandabschnitte 70a-1 und 70a-2 sind in Breitenrichtung B gleich weit von der Längsmitte LMa der Verbindungsgeraden Va entfernt.

Ein Bereich 76a minimaler Annäherung der beiden ebenen Flächen 62a und 64a bzw. ihrer Ränder 66a und 68a in Längsrichtung L ist an der Außenlasche 52 mit endlicher Ausdehnung in Breitenrichtung B symmetrisch um die Verbindungsgerade Va ausgebildet. In beiden Richtungen längs der Breitenrichtung B nimmt der Abstand der ebenen Flächen 62a und 64a in Längsrichtung L voneinander mit zunehmender Entfernung von der Verbindungsgeraden Va zu.

Die Außenlasche 52 weist an ihrer Innenseite zwei Breitenbereiche auf, nämlich auf jeder Seite der Verbindungsgeraden Va einen. Ein erster Breitenbereich BB1 beginnt an der Verbindungsgeraden Va und reicht in Breitenrichtung B bis zum Seitenrandabschnitt 70a-1, welche an der fertig montierten Kette 30 auf der radial inneren Seite 28-1 des Kettenrings 28 gelegen ist. Ein zweiter Breitenbereich BB2 beginnt ebenfalls an der Verbindungsgeraden Va und reicht längs der Breitenrichtung B bis zum entgegengesetzten Seitenrandabschnitt 70a-2, welcher auf der radial äußeren Seite 28-2 des Kettenrings 28 gelegen ist. Jeder Breitenbereich BB1 und BB2 endet genauer an jenem Punkt X1 und X2, an welchem in Draufsicht der Innenseite der Außenlasche 52 gemäß Figur 2 die Seitenrandabschnitte 70a-1 bzw. 70a-2 eine die Verbindungsgerade Va in ihrer Längsmitte LMa orthogonal schneidende Ebene P schneidet. Die Enden eines jeden Breitenbereichs BB1 und BB2 sind in Figur 7 mit gepunkteten Linien angedeutet.

Für den ersten Breitenbereich BB1 gilt, dass der Abstand des Randes 68a der ebenen Fläche 64a von der Ebene P mit zunehmender Entfernung von der Verbindungsgeraden Va in Breitenrichtung B stärker anwächst als der in Längsrichtung L entgegengesetzte Rand 66a.

Ebenso gilt für den zweiten Breitenbereich BB2, dass der Abstand des Randes 66a der ebenen Fläche 62a von der Ebene P mit zunehmender Entfernung von der Verbindungsgeraden Va in Breitenrichtung B stärker anwächst als der Abstand des Randes 68a. Bevorzugt ist die Innenseite der Außenlasche 52 bezüglich einer die die Verbindungsgerade Va in ihrer Längsmitte LMa orthogonal schneidenden, in Dickenrichtung T verlaufenden Symmetrieachse punktsymmetrisch.

Dabei hat jeder Rand 66a und 68a in dem Breitenbereich BB1 oder BB2, in welchem sein Abstand von der Ebene P weniger stark anwächst als der jeweilige andere Rand einen geradlinigen Abschnitt 66a-1 sowie 68a-1.die geradlinigen Randabschnitte sind vorzugsweise parallel zur Ebene P. Im jeweils anderen Breitenbereich BB1 oder BB2 weisen die Ränder 66a und 68a jeweils einen teilkreisförmigen Randabschnitt 66a-2 bzw. 68a-2 auf.

Die teilkreisförmigen Randabschnitte 66a-2 und 68a-2 sind an der fertig montierten Fahrradkette deckungsgleich mit teilkreisförmigen Abschnitten des Randes 70 der Innenlasche 50. Wegen der teilkreisförmigen Ausbildung der beiden Ränder bleiben diese auch deckungsgleich, wenn Innenlaschenglieder 42 und Außenlaschenglieder 40 relativ zueinander um ihre Kettengelenke 46 abgewinkelt werden. Im Bereich der geradlinigen Randabschnitte 66a-1 und 68a-1 werden bezogen auf die jeweiligen Mittelachsen M54a und M56a radial über die Ränder 70 zugeordneter Innenlaschen 50 überstehende Überstände 82a und 84a gebildet, welche einem Eindringen von Schmutz in einen Spaltraum zwischen Innenseite der Außenlasche 52 und Außenseite der Innenlasche 50 entgegenwirken.

Da die Fahrradkette 30 Ritzelzähne 33 zur Übertragung von Drehmoment auf das Hinterrad 16 "schiebt", ist der radiale Überstand 82a dem auf der radial inneren Seite 28-1 des Kettenrings 28 gelegenen Seitenrandabschnitt 70a-1 näher gelegen als dem entgegengesetzten Seitenrandabschnitt 70a-2. Damit befindet sich der radiale Überstand 82a bei einem Kämmungseingriff eines mit den Außenlaschen 52 gebildeten Außenlaschenglieds 40 im Bereich des Zahnfußes eines Ritzelzahns 33, welcher in einen vom Vertiefungsbereich 74a maßgeblich gebildeten Außenlaschen-Zwischenraums eingreift.

Wiederum kann der zentrale, die Verbindungsgerade Va enthaltende Bereich 74a-3 des Vertiefungsbereichs 74a eben, und zwar bevorzugt parallel zur ebenen Außenseite der Außenlasche 52 ausgebildet sein. Bereiche 74a-1 und 74a-2, welche von dem zentralen Bereich 74a-3 des Vertiefungsbereichs 74a bis zum jeweiligen Seitenrandabschnitt 70a-1 und 70a-2 reichen, können wiederum als Einführschrägen für einen Ritzelzahn 33 in den Außenlaschen-Zwischenraum hinein ausgebildet sein.

Wie Figur 7 zeigt, ändert sich der Abstand der beiden Ränder 66a und 68a in Längsrichtung L voneinander in den beiden Breitenbereichen BB1 und BB2 in den die jeweiligen Endpunkte X1 und X2 enthaltenden in Breitenrichtung äußersten 30 % Breitenabmessung stärker als in den unmittelbar von der Verbindungsgeraden Va ausgehenden innersten 30 % Breitenabmessung eines jeden Breitenbereichs BB1 bzw. BB2. Die Änderung des Abstands der Ränder 66a und 68a in Längsrichtung L voneinander in einem Abschnitt in Breitenrichtung B ist definiert als die Differenz der Abstände am Beginn und am Ende des Abschnitts, geteilt durch den Abstand am Beginn des jeweiligen Abschnitts.

In Figur 8 ist eine zweite Ausführungsform einer Außenlasche dargestellt, wobei Figur 8 die Innenseite der Außenlasche bei Betrachtung längs der Dickenrichtung T zeigt. Gleiche und funktionsgleiche Bauteile und Bauteilabschnitte wie in Figur 7 sind in Figur 8 mit gleichen Bezugszeichen versehen, jedoch erhöht um die Zahl 100. Die zweite Ausführungsform einer Außenlasche 152 von Figur 8 wird nachfolgend nur insofern beschrieben werden, als diese sich von der ersten Ausführungsform der Außenlasche 52 von Figur 7 unterscheidet, auf deren Beschreibung ansonsten auch zur Erläuterung der zweiten Ausführungsform von Figur 8 verwiesen wird.

Im Gegensatz zur punktsymmetrischen Innenseite der Außenlasche 52 ist die Innenseite der zweiten Ausführungsform der Außenlasche 152 sowohl bezüglich der Ebene P als auch bezüglich einer in Dickenrichtung T verlaufenden und die Verbindungsgerade Va enthaltenden Ebene spiegelsymmetrisch. Damit ist die Außenlasche 152 der zweiten Ausführungsform mit geringerem Fehlerrisiko zu montieren als jene der Figur 7, da jede Spiegelsymmetrie die Möglichkeiten einer Fehlanordnung einer Lasche an der Fahrradkette 30 verringert. Außerdem kann die Außenlasche 152 sich selbst gegenüberliegen während die Außenlasche 52 ein bezüglich einer zur Zeichenebene der Figur 7 parallelen Ebene spiegelsymmetrisches Gegenstück benötigt, um einen in Dickenrichtung T spiegelbildlich begrenzten Außenlaschen-Zwischenraum zu bilden.

Der zentrale Bereich 176a, in welchem die Ränder 166a und 168a in Längsrichtung L den geringsten Abstand voneinander aufweisen, hat in der zweiten Ausführungsform in Breitenrichtung B eine größere Abmessung als in der ersten Ausführungsform. Geradlinige Randbereiche 166a-1 und 168a-1 liegen einander in Längsrichtung L unmittel#bar gegenüber. Längs der Breitenrichtung B beiderseits des Bereichs 176a mit minimalem Längsabstand nimmt der Abstand der Ränder 166a und 168a voneinander zu, wobei die Änderung bzw. Zunahme in der zweiten Ausführungsform in den äußersten, den Punkt X1 enthaltenden 10 % Breitenabmessung des Breitenbereichs BB1 größer ist als in den innersten, die Verbindungsgerade Va enthaltenden 50 % Breitenabmessung des Breitenbereichs BB1. Für den Breitenbereich BB2 gilt wegen der genannten Spiegelsymmetrie bezüglich der die Verbindungsgerade Va enthaltenden und in Dickenrichtung T verlaufenden Symmetrieebene entsprechend das gleiche.

Abweichend von der Darstellung von Figur 8 können die Ränder 166a und 168a dort, wo sie an den Vertiefungsbereich 174a angrenzen, keinerlei geradlinigen Abschnitt aufweisen, sondern können von der Längsmitte LMa der Verbindungsgerade Va aus betrachtet jeweils konvexe Gestalt aufweisen. Der Ort 176a minimalen Abstands der Ränder 166a und 168a in Längsrichtung L voneinander fällt dann mit der Verbindungsgeraden Va zusammen.

Sowohl in der in Figur 8 dargestellten Ausgestaltung als auch in der im vorhergehenden Absatz beschriebenen Alternative ändert sich im gekrümmten Randabschnitt der Ränder 166a und 168a mit zunehmenden Abstand vom Ort 176a des Minimalabstandswerts der Krümmungsradius der Krümmung der Ränder 166a und 168a hinzu immer kleiner werdenden Radienwerten, vorzugsweise bis der Rand 170a der Außenlasche 152 erreicht ist.

## Patentansprüche

1. Asymmetrische Fahrradketten-Innenlasche (50; 150; 250) mit zwei mit Abstand voneinander ausgebildeten, die Innenlasche (50; 150; 250) in ihrer Dickenrichtung (T) durchsetzenden Verbindungsöffnungen (54, 56; 154, 156; 254, 256), welche jeweils zur Aufnahme eines Verbindungsbauteils (44) ausgebildet sind, um die Innenlasche (50; 150; 250) zur Bildung eines Innenlaschenglieds (42) einer Fahrradkette (30) mit einer weiteren Innenlasche (50; 150; 250) zu verbinden, wobei eine jeweilige Mittelachsen (M54, M56; M154, M156; M254, M256) der Verbindungsöffnungen (54, 56; 154, 156; 254, 256) verbindende Verbindungsgerade (V) eine Längsrichtung (L) der Innenlasche (50; 150; 250) definiert und wobei eine sowohl zur Längsrichtung (L) als auch zur Dickenrichtung (T) orthogonale Richtung eine Breitenrichtung (B) der Innenlasche (50; 150; 250) ist, wobei die Innenlasche (50; 150; 250) auf ihrer im fertig montierten Zustand in einer Fahrradkette (30) zu der weiteren Innenlasche (50; 150; 250) des selben Innenlaschenglieds (42) hinweisenden Innenseite zwei in Längsrichtung (L) der Innenlasche (50; 150; 250) mit Abstand voneinander vorgesehene und durch einen in Längsrichtung (L) zwischen ihnen gelegenen Vertiefungsbereich (74; 174; 274) getrennte ebene Flächen (62, 64; 162, 164; 262, 264) aufweist, von welchen jede ebene Fläche (62, 64; 162, 164; 262, 264) eine andere der Verbindungsöffnungen (54, 56; 154, 156; 254, 256) umgibt, wobei der Vertiefungsbereich (74; 174; 274) bezüglich den ebenen Flächen (62, 64; 162, 164; 262, 264) zu einer Innenseite entgegengesetzten Außenseite der Innenlasche (50; 150; 250) hin zurückgesetzt ist, **dadurch gekennzeichnet, dass** sich ein längs der Längsrichtung (L) zu messender Abstand zwischen den ebenen Flächen (62, 64; 162, 164; 262, 264) längs der Breitenrichtung (B) derart verändert, dass ein zwischen zwei Abstandsbereichen mit jeweils größeren Abstandswerten gelegener Ort (76; 176; 276) mit kleinstem, aber endlich großem Minimalabstandswert in Breitenrichtung (B) mit Abstand von der Verbindungsgerade (V) entfernt gelegen ist.

2. Asymmetrische Fahrradketten-Innenlasche (50; 150; 250) nach Anspruch 1, **dadurch gekennzeichnet, dass** im Bereich der Längsmitte (LM) der Verbindungsgeraden (V) die Entfernungen der in Längsrichtung (L) zwischen den Verbindungsöffnungen (54, 56; 154, 156; 254, 256) verlaufenden Seitenrandabschnitte (70-1, 70-2; 170-1, 170-2; 270-1, 270-2) der Innenlasche (50; 150; 250) von der Verbindungsgerade (V) in Breitenrichtung (B) auf unterschiedlichen Seiten der Verbindungsgeraden (V) unterschiedlich groß sind.

3. Asymmetrische Fahrradketten-Innenlasche (50; 150; 250) nach Anspruch 2, **dadurch gekennzeichnet, dass** der Seitenrandabschnitt (70-2; 170-2; 270-2) mit der größeren Entfernung von der Verbindungsgeraden (V) geradlinig parallel zu dieser verläuft und dass der entgegengesetzte Seitenrandabschnitt (70-1; 170-1; 170-2) mit der kleineren Entfernung von der Verbindungsgeraden (V) sich längs seines Verlaufs in Längsrichtung (L) der Verbindungsgeraden (V) zunächst annähert und sich dann wieder von dieser entfernt.

4. Asymmetrische Fahrradketten-Innenlasche (50) nach einem der vorhergehenden Ansprüche,
**dadurch gekennzeichnet, dass** der Ort (76) des Minimalabstandswerts in Breitenrichtung (B) einem in Längsrichtung (L) zwischen den Verbindungsöffnungen (54, 56) verlaufenden Seitenrandabschnitt (70-2) der Innenlasche (50) näher gelegen ist als der Verbindungsgeraden (V).

5. Asymmetrische Fahrradketten-Innenlasche (50; 150; 250) nach Anspruch 4, unter Einbeziehung wenigstens eines der Ansprüche 2 oder 3,
**dadurch gekennzeichnet, dass** der Ort (76; 176; 276) des Minimalabstandswerts auf derjenigen Seite der Verbindungsgeraden (V) gelegen ist, auf welcher die Entfernung des Seitenrandabschnitts (70-2; 170-2; 270-2) von der Verbindungsgeraden (V) größer ist.

6. Asymmetrische Fahrradketten-Innenlasche (50; 150; 250) nach einem der vorhergehenden Ansprüche,
**dadurch gekennzeichnet, dass** in Breitenrichtung (B) beiderseits der Verbindungsgeraden (V), jeweils mit Abstand vom Ort (76; 176; 276) des Minimalabstandswerts, je ein Ort (78, 80; 178, 180; 278, 280) eines Maximalabstandswerts existiert, an welchem der auf der jeweiligen Seite der Verbindungsgerade (V) auftretende, in Längsrichtung (L) zu messende Abstand zwischen den beiden ebenen Flächen (62, 64; 162, 164; 262, 264) am größten ist, wobei jeder der beiden Maximalabstandswerte betragsmäßig größer als der Minimalabstandswert ist und wobei die Entfernung des Orts (76; 176; 276) des Minimalabstandswerts von den jeweiligen Orten (78, 80; 178, 180; 278, 280) der Maximalabstandswerte unterschiedlich groß ist.

7. Asymmetrische Fahrradketten-Innenlasche (50; 150) nach einem der vorhergehenden Ansprüche,
**dadurch gekennzeichnet, dass** in einem zwischen den Verbindungsöffnungen (54, 56; 154, 156) gelegenen Längsbereich (66-1, 68-1; 166-1, 168-1) der Innenlasche (50; 150) der Rand wenigstens einer ebenen Fläche (62, 64; 162, 164), vorzugsweise die Ränder beider ebenen Flächen (62, 64; 162, 164), in Breitenrichtung (B) wenigstens abschnittsweise geradlinig verläuft bzw. verlaufen.

8. Asymmetrische Fahrradketten-Innenlasche (150) nach Anspruch 7,
**dadurch gekennzeichnet, dass** in dem Längsbereich (166-1, 168-1) die Ränder (166, 168) beider ebenen Flächen (162, 164) wenigstens abschnittsweise geradlinig verlaufen, wobei die geradlinigen Flächenrandbereiche (166-1, 168-1) wenigstens abschnittsweise parallel zueinander verlaufen.

9. Asymmetrische Fahrradketten-Innenlasche (50) nach Anspruch 7 oder 8,
**dadurch gekennzeichnet, dass** in dem Längsbereich (66-1, 68-1) die Ränder (66, 68) beider ebenen Flächen (62, 64) wenigstens abschnittsweise geradlinig verlaufen, wobei sich wenigstens abschnittsweise der in Längsrichtung (L) zu messende Abstand der geradlinigen Flächenrandbereiche (66-1, 68-1) in Breitenrichtung (B) mit zunehmender Annäherung an den Ort (76) des Minimalabstandswerts verringert, vorzugsweise kontinuierlich verringert.

10. Asymmetrische Fahrradketten-Innenlasche (50; 150; 250) nach einem der vorhergehenden Ansprüche,
**dadurch gekennzeichnet, dass** in einem zwischen den Verbindungsöffnungen (54, 56; 154, 156; 254, 256) gelegenen Längsbereich (66-1, 66-2, 66-3; 166-1, 166-2, 166-3; 2 66-2, 266-3) der Innenlasche (50; 150; 250) der Rand (66, 68; 166, 168; 266, 268) wenigstens einer ebenen Fläche (62, 64; 162, 164; 262, 264), vorzugsweise die Ränder (66, 68; 166, 168; 266, 268) beider ebenen Flächen (62, 64; 162, 164; 262, 264), in Breitenrichtung (B) kontinuierlich gleichsinnig gekrümmt mit längs der Breitenrichtung (B) sich ändernden Krümmungsradien verläuft bzw. verlaufen.

11. Asymmetrische Fahrradketten-Innenlasche (50; 150; 250) nach einem der vorhergehenden Ansprüche,
**dadurch gekennzeichnet, dass** der Vertiefungsbereich (74; 174; 274) in einem die Verbindungsgerade (V) enthaltenden Breitenbereich (74-3; 174-3; 274-3) einen ebenen, vorzugsweise zur Dickenrichtung (T) orthogonalen, Oberflächenbereich aufweist.

12. Asymmetrische Fahrradketten-Innenlasche (50; 150; 250) nach Anspruch 11,
**dadurch gekennzeichnet, dass** der ebene Oberflächenbereich (74-3; 174-3; 274-3) in Breitenrichtung (B) relativ zur Verbindungsgerade (V) zu einem Seitenrandbereich (70-2; 170-2; 270-2) hin versetzt angeordnet ist.

13. Asymmetrische Fahrradketten-Innenlasche (50; 150; 250) nach einem der vorhergehenden Ansprüche,
**dadurch gekennzeichnet, dass** die Verbindungsöffnungen (54, 56; 154, 156; 254, 256), radial innerhalb der sie jeweils umgebenden ebenen Flächen (62, 64; 162, 164; 262, 264), von Hülsenabschnitten (58, 60; 158, 160; 258, 260) umgeben sind, welche in Dickenrichtung (T) der Innenlaschen (50; 150; 250) über die sie umgebenden ebenen Flächen (62, 64; 162, 164; 262, 264) vorstehen.

14. Asymmetrische Fahrradketten-Innenlasche (50; 150; 250) nach einem der vorhergehenden Ansprüche,
**dadurch gekennzeichnet, dass** die der Innenseite entgegengesetzte Außenseite der Innenlasche (50; 150; 250) eine ebene Außenfläche (86) aufweist, welche sich sowohl zwischen den Verbindungsöffnungen (54, 56; 154, 156; 254, 256) erstreckt, als auch die Verbindungsöffnungen (54, 56; 154, 156; 254, 256) wenigstens teilweise, vorzugsweise vollständig umgibt.

15. Asymmetrische Fahrradketten-Innenlasche (50; 150; 250) nach Anspruch 14,
**dadurch gekennzeichnet, dass** die Außenseite frei ist von Vorsprüngen, die in Dickenrichtung (T) über die ebene Außenfläche (86) vorstehen.

16. Asymmetrische Fahrradketten-Innenlasche (50; 150; 250) nach Anspruch 14 oder 15,
**dadurch gekennzeichnet, dass** die Außenseite die Verbindungsöffnungen (54, 56; 154, 156; 254, 256) umgebende Vertiefungen (88, 90), vorzugsweise sich in Richtung von der ebenen Außenfläche (86) weg verjüngende Vertiefungen (88, 90) aufweist.

17. Asymmetrische Fahrradketten-Innenlasche (50; 150; 250) nach einem der vorhergehenden Ansprüche,
**dadurch gekennzeichnet, dass** die Innenseite oder/und die Außenseite, vorzugsweise die gesamte Innenlasche (50; 150; 250), bezüglich einer zur Verbindungsgeraden (V) orthogonalen Symmetrieebene (SE) spiegelsymmetrisch ist.

18. Fahrradketten-Außenlasche (52; 152) mit zwei mit Abstand voneinander ausgebildeten, die Außenlasche (52; 152) in ihrer Dickenrichtung (T) durchsetzenden Verbindungsöffnungen (54a, 56a; 154a, 156a), welche jeweils zur Aufnahme eines Verbindungsbauteils (44) ausgebildet sind, um die Außenlasche (52; 152) zur Bildung eines Außenlaschenglieds (40) einer Fahrradkette (30) mit einer weiteren Außenlasche (52; 152) zu verbinden, wobei eine jeweilige Mittelachsen (M54a, M56a; M154a, M156a) der Verbindungsöffnungen (54a, 56a; 154a, 156a) verbindende Verbindungsgerade (Va) eine Längsrichtung (L) der Außenlasche (52; 152) definiert und wobei eine sowohl zur Längsrichtung (L) als auch zur Dickenrichtung (T) orthogonale Richtung eine Breitenrichtung (B) der Außenlasche (52; 152) ist. wobei die Außenlasche (52; 152) auf ihrer im fertig montierten Zustand In einer Fahrradkette (30) zu der weiteren Außenlasche (52; 152) des selben Außenlaschenglieds (40) hinweisenden Innenseite zwei In Längsrichtung (L) der Außenlasche (52; 152) mit Abstand voneinander vorgesehene und durch einen in Längsrichtung (L) zwischen ihnen gelegenen Vertiefungsbereich (74a; 174a) getrennte ebene Flächen (62a, 64a; 162a, 164a) aufweist, von welchen jede ebene Fläche (62a, 64a; 162a, 164a) eine andere der Verbindungsöffnungen (54a, 56a; 154a, 156a) umgibt, wobei der Vertiefungsbereich (74a; 174a) bezüglich den ebenen Flächen (62a, 64a; 162a, 164a) zu einer der Innenseite entgegengesetzten Außenseite der Außenlasche (52; 152) hin zurückgesetzt ist, wobei in einem die Verbindungsgerade (Va) enthaltenden, sich in Breitenrichtung (B) erstreckenden Minimalabstandsbereich (76a; 176a) der in Längsrichtung (L) zu messende Abstand zwischen den ebenen Flächen (62a, 64a; 162a, 164a) minimal ist,
wobei der Abstand zwischen den ebenen Flächen (62a, 64a; 162a, 164a) ausgehend von dem Minimalabstandsbereich (76a; 176a) zu jedem der beiden die Außenlasche (52; 152) in Breitenrichtung (B) begrenzenden Seitenränder (70a-1, 70a-2; 170a-1, 170a-2) hin größer wird,
**dadurch gekennzeichnet, dass** der Abstand In Richtung zu dem einen Seitenrand (70a-1, 70a-2) hin auf einer ersten Seite einer die Verbindungsgerade (Va) in ihrer Längsmitte (LMa) orthogonal schneidenden Bezugsebene (P) stärker anwächst, als auf der entgegengesetzten zweiten Seite der Bezugsebene (P), und wobel der Abstand in entgegengesetzter Richtung zu dem jeweils anderen Seitenrand (70a-1, 70a-2) hin auf der zweiten Seite der Bezugsebene (P) stärker anwächst als auf deren ersten Seite.

19. Fahrradketten-Außenlasche (52; 152) nach Anspruch 18,
**dadurch gekennzeichnet, dass** für wenigstens einen Breitenbereich (BB1, BB2) der Außenlasche (52; 152), welcher sich ausgehend von der Verbindungsgerade (Va) parallel zur Breitenrichtung (B) bis zur Längsmitte (LMa) eines Seitenrands (70a-1, 70a-2; 170a-1, 170a-2) hin erstreckt, vorzugsweise für beide Breitenbereiche (BB1, BB2), gilt, dass sich ein in Längsrichtung (L) zu messender Abstand zwischen an den Vertiefungsbereich (74a; 174a) angrenzenden Rändern der ebenen Flächen (62a, 64a; 162a, 164a) in den der Längsmitte (LMa) des Seitenrands (70a-1, 70a-2; 170a-1, 170a-2) nächstgelegenen 50 %, vorzugsweise 30 %, besonders bevorzugt 10 % der Breitenabmessung des Breitenbereichs (BB1, BB2), stärker ändert als In den Verbindungsgerade (Va) nächstgelegenen 30 %, vorzugsweise 40 %, besonders bevorzugt 50 % der Breitenabmessung des Breitenbereichs (BB1, BB2).

20. Fahrradketten-Außenlasche (52) nach Anspruch 18,
**dadurch gekennzeichnet, dass** für wenigstens eine ebene Fläche (62a, 64a), vorzugsweise für beide ebene Flächen (62a, 64a), gilt, dass ein an den Vertiefungsbereich (74a) angrenzender Bereich des Randes der ebenen Fläche (62a, 64a) in Breitenrichtung (B) auf unterschiedlichen Seiten der Verbindungsgerade (Va) unterschiedlich stark gekrümmt ist.

21. Fahrradketten-Außenlasche (52) nach Anspruch 20,
**dadurch gekennzeichnet, dass** für wenigstens eine ebene Fläche (62a, 64a), vorzugsweise für beide ebene Flächen (62a, 64a), gilt, dass der an den Vertiefungsbereich (74a) angrenzende Bereich des Randes der ebenen Fläche (62a, 64a) in Breitenrichtung (B) auf einer Seite der Verbindungsgerade (Va) abschnittsweise einen gekrümmten und auf der anderen Seite abschnittsweise einen geradlinigen Verlauf hat.

22. Fahrradketten-Außenlasche (52) nach Anspruch 21,
**dadurch gekennzeichnet, dass** dem abschnittsweise geradlinigen Randbereichsabschnitt in Längsrichtung (L) ein gekrümmter Randbereichsabschnitt der jeweils anderen ebenen Fläche (62a, 64a) gegenüberliegt, und vorzugsweise umgekehrt.

23. Fahrradketten-Außenlasche (52; 152) nach einem der Ansprüche 18 bis 22,
**dadurch gekennzeichnet, dass** in einem ersten Breitenbereich der Außenlasche (52; 152), welcher sich ausgehend von der Verbindungsgerade (Va) parallel zur Breitenrichtung (B) bis zur Längsmitte (LMa) des einen Seitenrands (70a-1, 70a-2; 170a-1, 170a-2) hin erstreckt, der Abstand zwischen an den Vertlefungsbereich (74a; 174a) angrenzenden Rändern der ebenen Flächen (62a, 64a; 162a, 164a) an der Längsmitte (LMa) des einen Seitenrands (70a-1, 70a-2; 170a-1, 170a-2) maximal Ist, und dass In einem zweiten Breitenbereich der Außenlasche (52; 152), welcher sich ausgehend von der Verbindungsgerade (Va) parallel zur Breitenrichtung (B) in entgegengesetzter Richtung bis zur Längsmitte (LMa) des anderen Seitenrands (70a-1, 70a-2; 170a-1, 170a-2) hin erstreckt, der Abstand zwischen an den Vertiefungsbereich (74a; 174a) angrenzenden Rändern der ebenen Flächen (62a, 64a; 162a, 164a) an dem anderen Seitenrand (70a-1, 70a-2; 170a-1, 170a-2) maximal ist, wobei bevorzugt die maximalen Abstände im ersten und im zweiten Breitenbereich betragsmäßig gleich groß sind.

24. Fahrradketten-Außenlasche (52; 152) nach einem der Ansprüche 18 bis 23,
**dadurch gekennzeichnet, dass** jede der Verbindungsöffnungen (54a, 56a; 154a, 156a) radial innerhalb der sie umgebenden ebenen Fläche (62a, 64a; 162a, 164a) von einem In Dickenrichtung (T) über die jeweilige ebene Fläche (62a, 64a; 162a, 164a) vorstehende Vorsprung (55a, 57a; 155a, 157a), insbesondere sich in Richtung von der jeweiligen ebenen Fläche (62a, 64a; 162a, 164a) weg verjüngenden Vorsprung (55a, 57a; 155a, 157a) umgeben Ist.

25. Fahrradketten-Außenlasche (52; 152) nach einem der Ansprüche 18 bis 24,
**dadurch gekennzeichnet, dass** die Innenseite oder/und die Außenseite, vorzugsweise die gesamte Außenlasche (52; 152), bezüglich einer die Verbindungsgerade (Va) In Ihrer Längsmitte (LMa) schneidenden, in Dickenrichtung (T) verlaufenden Symmetrieachse punktsymmetrisch Ist.

26. Kettenring (28), umfassend eine geschlossen umlaufende Fahrradkette (30) mit in Umlaufrichtung (D) alternierend aufeinander folgenden Außen- und Innenlaschengliedern (40, 42), wobei die Innenlaschenglleder (42) aus zwei asymmetrischen Innenlaschen (50; 150; 250) nach einem der Ansprüche 1 bis 17 gebildet sind oder/und wobei die Außenlaschenglieder (40) aus zwei Außenlaschen (52; 152) nach einem der Ansprüche 18 bis 25 gebildet sind.

27. Kettenring (28) nach Anspruch 26,
**dadurch gekennzeichnet, dass** die Innenlaschenglieder (42) aus zwei asymmetrischen Innenlaschen (50; 150; 250) nach Anspruch 2 oder nach einem auf den Anspruch 2 rückbezogenen Anspruch der Ansprüche 3 bis 17 gebildet sind, wobei die Seitenrandabschnitte (70a-2; 170a-2; 270a-2) mit dem größeren Abstand von der Verbindungsgeraden (Va) am Kettenring (28) radial außen liegend angeordnet sind.

## Claims

1. Asymmetric bicycle chain inner link (50; 150; 250) having two connecting openings (54, 56; 154, 156; 254, 256) which are formed at a distance from each other, pass through the inner link (50; 150; 250) in the thickness direction (T) thereof and are each designed for receiving a connecting component (44) in order to connect the inner link (50; 150; 250) to a further inner link (50; 150; 250) in order to form an inner link member (42) of a bicycle chain (30), wherein a connecting straight line (V) connecting respective centre axes (M54, M56; M154, M156; M254, M256) of the connecting openings (54, 56; 154, 156; 254, 256) defines a longitudinal direction (L) of the inner link (50; 150; 250), and wherein a direction orthogonal both with respect to the longitudinal direction (L) and with respect to the thickness direction (T) is a width direction (B) of the inner link (50; 150; 250), wherein the inner link (50; 150; 250) has, on its inner side facing the further inner link (50; 150; 250) of the same inner link member (42) in the completely mounted state in a bicycle chain (30), two flat surfaces (62, 64; 162, 164; 262, 264) which are provided at a distance from each other in the longitudinal direction (L) of the inner link (50; 150; 250) and are separated by a depression region (74; 174; 274), which is placed in the longitudinal direction (L) between them, and of which each flat surface (62, 64; 162, 164; 262, 264) surrounds another of the connecting openings (54, 56; 154, 156; 254, 256), wherein the depression region (74; 174; 274) is set back with respect to the flat surfaces (62, 64; 162, 164; 262, 264) towards an outer side of the inner link (50; 150; 250) that is opposite the inner side, **characterized in that** a distance, to be measured along the longitudinal direction (L), between the flat surfaces (62, 64; 162, 164; 262, 264) changes along the width direction (B) in such a manner that a location (76; 176; 276) situated between two distance regions having in each case greater distance values and having the smallest, but finitely large minimum distance value is situated at a distance away from the connecting straight line (V) in the width direction (B).

2. Asymmetric bicycle chain inner link (50; 150; 250) according to Claim 1,
**characterized in that**, in the region of the longitudinal centre (LM) of the connecting straight line (V), the distances of those side edge portions (70-1, 70-2; 170-1, 170-2; 270-1, 270-2) of the inner link (50; 150; 250) that run in the longitudinal direction (L) between the connecting openings (54, 56; 154, 156; 254, 256) away from the connecting straight line (V) in the width direction (B) differ in size on different sides of the connecting straight line (V).

3. Asymmetric bicycle chain inner link (50; 150; 250) according to Claim 2,
**characterized in that** the side edge portion (70-2; 170-2; 270-2) with the greater distance away from the connecting straight line (V) runs rectilinearly parallel thereto, and **in that** the opposite side edge portion (70-1; 170-1; 170-2) with the smaller distance away from the connecting straight line (V) first of all along its profile in the longitudinal direction (L) approaches the connecting straight line (V) and then moves away from the latter again.

4. Asymmetric bicycle chain inner link (50) according to one of the preceding claims,
**characterized in that** the location (76) of the minimum distance value is situated closer in the width direction (B) to a side edge portion (70-2) of the inner link (50), which side edge portion runs in the longitudinal direction (L) between the connecting openings (54, 56), than to the connecting straight line (V).

5. Asymmetric bicycle chain inner link (50; 150; 250) according to Claim 4, with incorporation of at least one of Claims 2 and 3,
**characterized in that** the location (76; 176; 276) of the minimum distance value is situated on the same side of the connecting straight line (V) on which the distance of the side edge portion (70-2; 170-2; 270-2) away from the connecting straight line (V) is greater.

6. Asymmetric bicycle chain inner link (50; 150; 250) according to one of the preceding claims,
**characterized in that**, in the width direction (B) on both sides of the connecting straight line (V), in each case at a distance from the location (76; 176; 276) of the minimum distance value, there is in each case a location (78, 80; 178, 180; 278, 280) of a maximum distance value at which the distance, which occurs on the respective side of the connecting straight line (V) and is to be measured in the longitudinal direction (L), between the two flat surfaces (62, 64; 162, 164; 262, 264) is greatest, wherein each of the two maximum distance values is greater in terms of amount than the minimum distance value, and wherein the distance of the location (76; 176; 276) of the minimum distance value away from the respective locations (78, 80; 178, 180; 278, 280) of the maximum distance values differs in size.

7. Asymmetric bicycle chain inner link (50; 150) according to one of the preceding claims,
**characterized in that**, in a longitudinal region (66-1, 68-1; 166-1, 168-1) of the inner link (50; 150), which longitudinal region is situated between the connecting openings (54, 56; 154, 156), the edge of at least one flat surface (62, 64; 162, 164), preferably the edges of the two flat surfaces (62, 64; 162, 164), run(s) rectilinearly at least in portions in the width direction (B).

8. Asymmetric bicycle chain inner link (150) according to Claim 7,
**characterized in that**, in the longitudinal region (166-1, 168-1), the edges (166, 168) of the two flat surfaces (162, 164) run rectilinearly at least in portions, wherein the rectilinear surface edge regions (166-1, 168-1) run parallel to one another at least in portions.

9. Asymmetric bicycle chain inner link (50) according to Claim 7 or 8,
**characterized in that**, in the longitudinal region (66-1, 68-1), the edges (66, 68) of the two flat surfaces (62, 64) run rectilinearly at least in portions, wherein the distance, to be measured in the longitudinal direction (L), of the rectilinear surface edge regions (66-1, 68-1) is reduced at least in portions, preferably is reduced continuously, in the width direction (B) as they approach closer to the location (76) of the minimum distance value.

10. Asymmetric bicycle chain inner link (50; 150; 250) according to one of the preceding claims,
**characterized in that**, in a longitudinal region (66-1, 66-2, 66-3; 166-1, 166-2, 166-3; 266-2, 266-3) of the inner link (50; 150; 250), which longitudinal region is situated between the connecting openings (54, 56; 154, 156; 254, 256), the edge (66, 68; 166, 168; 266, 268) of at least one flat surface (62, 64; 162, 164; 262, 264), preferably the edges (66, 68; 166, 168; 266, 268) of the two flat surfaces (62, 64; 162, 164; 262, 264), run(s) in the width direction (B) in a manner curved continuously in the same direction with radii of curvature changing along the width direction (B).

11. Asymmetric bicycle chain inner link (50; 150; 250) according to one of the preceding claims,
**characterized in that** the depression region (74; 174; 274), in a width region (74-3; 174-3; 274-3) containing the connecting straight line (V), has a flat surface region which is preferably orthogonal with respect to the thickness direction (T).

12. Asymmetric bicycle chain inner link (50; 150; 250) according to Claim 11,
**characterized in that** the flat surface region (74-3; 174-3; 274-3) is arranged offset towards a side edge region (70-2; 170-2; 270-2) relative to the connecting straight line (V) in the width direction (B).

13. Asymmetric bicycle chain inner link (50; 150; 250) according to one of the preceding claims,
**characterized in that** the connecting openings (54, 56; 154, 156; 254, 256) are surrounded radially within the flat surfaces (62, 64; 162, 164; 262, 264) surrounding them in each case by sleeve portions (58, 60; 158, 160; 258, 260) which protrude in the thickness direction (T) of the inner links (50; 150; 250) over the flat surfaces (62, 64; 162, 164; 262, 264) surrounding said sleeve portions.

14. Asymmetric bicycle chain inner link (50; 150; 250) according to one of the preceding claims,
**characterized in that** the outer side of the inner link (50; 150; 250) that is opposite the inner side has a flat outer surface (86) which both extends between the connecting openings (54, 56; 154, 156; 254, 256) and also at least partially, preferably completely surrounds the connecting openings (54, 56; 154, 156; 254, 256).

15. Asymmetric bicycle chain inner link (50; 150; 250) according to Claim 14,
**characterized in that** the outer side is free from projections which protrude over the flat outer surface (86) in the thickness direction (T).

16. Asymmetric bicycle chain inner link (50; 150; 250) according to Claim 14 or 15,
**characterized in that** the outer side has depressions (88, 90) surrounding the connecting openings (54, 56; 154, 156; 254, 256), preferably depressions (88, 90) tapering in a direction away from the flat outer surface (86).

17. Asymmetric bicycle chain inner link (50; 150; 250) according to one of the preceding claims,
**characterized in that** the inner side or/and the outer side, preferably the entire inner link (50; 150; 250), is mirror-symmetrical with respect to a plane of symmetry (SE) orthogonal with respect to the connecting straight line (V).

18. Bicycle chain outer link (52; 152) having two connecting openings (54a, 56a; 154a, 156a) which are formed at a distance from each other, pass through the outer link (52; 152) in the thickness direction (T) thereof and are each designed for receiving a connecting component (44) in order to connect the outer link (52; 152) to a further outer link (52; 152) in order to form an outer link member (40) of a bicycle chain (30), wherein a connecting straight line (Va) connecting respective centre axes (M54a, M56a; M154a, M156a) of the connecting openings (54a, 56a; 154a, 156a) defines a longitudinal direction (L) of the outer link (52; 152), and wherein a direction orthogonal both with respect to the longitudinal direction (L) and with respect to the thickness direction (T) is a width direction (B) of the outer link (52; 152), wherein the outer link (52; 152) has, on its inner side facing the further outer link (52; 152) of the same outer link member (40) in the completely mounted state in a bicycle chain (30), two flat surfaces (62a, 64a; 162a, 164a) which are provided at a distance from one another in the longitudinal direction (L) of the outer link (52; 152) and are separated by a depression region (74a; 174a), which is placed in the longitudinal direction (L) between them, and of which each flat surface (62a, 64a; 162a, 164a) surrounds another of the connecting openings (54a, 56a; 154a, 156a), wherein the depression region (74a; 174a) is set back with respect to the flat surfaces (62a, 64a; 162a, 164a) towards an outer side of the outer link (52; 152) that is opposite the inner side, wherein, in a minimum distance region (76a; 176a) containing the connecting straight line (Va) and extending in the width direction (B), the distance, to be measured in the longitudinal direction (L), between the flat surfaces (62a, 64a; 162a, 164a) is minimal,
wherein the distance between the flat surfaces (62a, 64a; 162a, 164a) starting from the minimum distance region (76a; 176a) becomes larger towards each of the two side edges (70a-1, 70a-2; 170a-1, 170a-2) bounding the outer link (52; 152) in the width direction (B),
**characterized in that** the distance in the direction of the one side edge (70a-1, 70a-2) on a first side of a reference plane (P) orthogonally intersecting the connecting straight line (Va) in its longitudinal centre (LMa) increases more greatly than on the opposite, second side of the reference plane (P), and wherein the distance in the opposite direction towards the respective other side edge (70a-1, 70a-2) on the second side of the reference plane (P) increases more greatly than on the first side thereof.

19. Bicycle chain outer link (52; 152) according to Claim 18,
**characterized in that**, for at least one width region (BB1, BB2) of the outer link (52; 152), which width region extends from the connecting straight line (Va) parallel to the width direction (B) as far as the longitudinal centre (LMa) of a side edge (70a-1, 70a-2; 170a-1, 170a-2), preferably for both width regions (BB1, BB2) it holds true that a distance, to be measured in the longitudinal direction (L), between edges, which are adjacent to the depression region (74a; 174a), of the flat surfaces (62a, 64a; 162a, 164a) changes more greatly in the 50%, preferably 30%, particularly preferably 10% of the width dimension of the width region (BB1, BB2) that is situated closest to the longitudinal centre (LMa) of the side edge (70a-1, 70a-2; 170a-1, 170a-2) than in the 30%, preferably 40%, particularly preferably 50% of the width dimension of the width region (BB1, BB2) that is situated closest to the connecting straight line (Va).

20. Bicycle chain outer link (52) according to Claim 18,
**characterized in that**, for at least one flat surface (62a, 64a), preferably for both flat surfaces (62a, 64a), it holds true that a region of the edge of the flat surface (62a, 64a) that is adjacent to the depression region (74a) is curved to a differing degree in the width direction (B) on different sides of the connecting straight line (Va).

21. Bicycle chain outer link (52) according to Claim 20,
**characterized in that**, for at least one flat surface (62a, 64a), preferably for both flat surfaces (62a, 64a), it holds true that that region of the edge of the flat surface (62a, 64a) which is adjacent to the depression region (74a) has a curved profile in portions in the width direction (B) on one side of the connecting straight line (Va) and a rectilinear profile in portions on the other side.

22. Bicycle chain outer link (52) according to Claim 21,
**characterized in that** a curved edge region portion of the respective other flat surface (62a, 64a) lies opposite that edge region portion which is rectilinear in portions in the longitudinal direction (L), and preferably vice versa.

23. Bicycle chain outer link (52; 152) according to one of Claims 18 to 22,
**characterized in that**, in a first width region of the outer link (52; 152), which width region extends from the connecting straight line (Va) parallel to the width direction (B) as far as the longitudinal centre (LMa) of the one side edge (70a-1, 70a-2; 170a-1, 170a-2), the distance between edges of the flat surfaces (62a, 64a; 162a, 164a) that are adjacent to the depression region (74a; 174a) is at maximum on the longitudinal centre (LMa) of the one side edge (70a-1, 70a-2; 170a-1, 170a-2), and **in that**, in a second width region of the outer link (52; 152), which width region extends from the connecting straight line (Va) parallel to the width direction (B) in the opposite direction as far as the longitudinal centre (LMa) of the other side edge (70a-1, 70a-2; 170a-1, 170a-2), the distance between edges of the flat surfaces (62a, 64a; 162a, 164a) that are adjacent to the depression region (74a; 174a) is at maximum on the other side edge (70a-1, 70a-2; 170a-1, 170a-2), wherein the maximum distances in the first and in the second width region are preferably identical in size in terms of amount.

24. Bicycle chain outer link (52; 152) according to one of Claims 18 to 23,
**characterized in that** each of the connecting openings (54a, 56a; 154a, 156a) is surrounded radially within the flat surface (62a, 64a; 162a, 164a) surrounding them by a projection (55a, 57a; 155a, 157a) protruding over the respective flat surface (62a, 64a; 162a, 164a) in the thickness direction (T), in particular a projection (55a, 57a; 155a, 157a) tapering in a direction away from the respective flat surface (62a, 64a; 162a, 164a).

25. Bicycle chain outer link (52; 152) according to one of Claims 18 to 24,
**characterized in that** the inner side or/and the outer side, preferably the entire outer link (52; 152), is point-symmetrical with respect to an axis of symmetry intersecting the connecting straight line (Va) in the longitudinal centre (LMa) thereof and running in the thickness direction (T).

26. Chain ring (28) comprising a bicycle chain (30) revolving in a self-contained manner and having outer and inner link members (40, 42) following one another in an alternating manner in the revolving direction (D), wherein the inner link members (42) are formed from two asymmetric inner links (50; 150; 250) according to one of Claims 1 to 17 or/and wherein the outer link members (40) are formed from two outer links (52; 152) according to one of Claims 18 to 25.

27. Chain ring (28) according to Claim 26,
**characterized in that** the inner link members (42) are formed from two asymmetric inner links (50; 150; 250) according to Claim 2 or according to a claim of Claims 3 to 17 that refers back to Claim 2, wherein the side edge portions (70a-2; 170a-2; 270a-2) at the greater distance from the connecting straight line (Va) are arranged lying radially on the outside of the chain ring (28).

## Revendications

1. Maillon intérieur asymétrique de chaîne de bicyclette (50 ; 150 ; 250) muni de deux ouvertures de liaison (54, 56 ; 154, 156 ; 254, 256) formées à distance l'une de l'autre, traversant le maillon intérieur (50 ; 150 ; 250) dans sa direction d'épaisseur (T), qui sont chacune configurées pour la réception d'un composant de liaison (44), afin de relier le maillon intérieur (50 ; 150 ; 250) avec un maillon intérieur supplémentaire (50 ; 150 ; 250) pour la formation d'un élément à maillons intérieurs (42) d'une chaîne de bicyclette (30), une droite de liaison (V) reliant les axes médians respectifs (M54, M56 ; M154, M156 ; M254, M256) des ouvertures de liaison (54, 56 ; 154, 156 ; 254, 256) définissant une direction longitudinale (L) du maillon intérieur (50 ; 150 ; 250), et une direction orthogonale aussi bien à la direction longitudinale (L) qu'à la direction d'épaisseur (T) étant une direction de largeur (B) du maillon intérieur (50 ; 150 ; 250), le maillon intérieur (50 ; 150 ; 250) comprenant, sur son côté intérieur orienté à l'état monté dans une chaîne de bicyclette (30) vers le maillon intérieur supplémentaire (50 ; 150 ; 250) du même élément à maillons intérieurs (42), deux surfaces planes (62, 64 ; 162, 164 ; 262, 264) prévues à distance l'une de l'autre dans la direction longitudinale (L) du maillon intérieur (50 ; 150 ; 250) et séparées par une zone en creux (74 ; 174 ; 274) située entre elles dans la direction longitudinale (L), parmi lesquelles chaque surface plane (62, 64 ; 162, 164 ; 262, 264) entoure une autre des ouvertures de liaison (54, 56 ; 154, 156 ; 254, 256), la zone en creux (74 ; 174 ; 274) étant en retrait par rapport aux surfaces planes (62, 64 ; 162, 164 ; 262, 264) vers un côté extérieur opposé au côté intérieur du maillon intérieur (50 ; 150 ; 250), **caractérisé en ce qu'**une distance à mesurer le long de la direction longitudinale (L) entre les surfaces planes (62, 64 ; 162, 164 ; 262, 264) varie le long de la direction de largeur (B), de telle sorte qu'un emplacement (76 ; 176 ; 276), situé entre deux zones de distance présentant chacune des valeurs de distance plus grandes, présentant une valeur de distance minimale la plus petite, mais finie, est situé éloigné à une distance de la droite de liaison (V) dans la direction de largeur (B).

2. Maillon intérieur asymétrique de chaîne de bicyclette (50 ; 150 ; 250) selon la revendication 1, **caractérisé en ce que,** dans la zone du milieu longitudinal (LM) de la droite de liaison (V), les éloignements des sections de bord latéral (70-1, 70-2 ; 170-1, 170-2 ; 270-1, 270-2), s'étendant dans la direction longitudinale (L) entre les ouvertures de liaison (54, 56 ; 154, 156 ; 254, 256), du maillon intérieur (50 ; 150 ; 250) de la droite de liaison (V) dans la direction de largeur (B) sont différents sur des côtés différents de la droite de liaison (V).

3. Maillon intérieur asymétrique de chaîne de bicyclette (50 ; 150 ; 250) selon la revendication 2, **caractérisé en ce que** la section de bord latéral (70-2 ; 170-2 ; 270-2) présentant l'éloignement le plus grand de la droite de liaison (V) s'étend de manière rectiligne parallèlement à celle-ci, et **en ce que** la section de bord latéral opposée (70-1 ; 170-1 ; 170-2) présentant le plus petit éloignement de la droite de liaison (V) se rapproche tout d'abord de la droite de liaison (V) le long de son parcours dans la direction longitudinale (L) et puis s'éloigne à nouveau de celle-ci.

4. Maillon intérieur asymétrique de chaîne de bicyclette (50) selon l'une quelconque des revendications précédentes, **caractérisé en ce que** l'emplacement (76) de la valeur de distance minimale dans la direction de largeur (B) est situé plus près d'une section de bord latéral (70-2), s'étendant dans la direction longitudinale (L) entre les ouvertures de liaison (54, 56), du maillon intérieur (50) que de la droite de liaison (V) .

5. Maillon intérieur asymétrique de chaîne de bicyclette (50 ; 150 ; 250) selon la revendication 4, incluant au moins une des revendications 2 ou 3, **caractérisé en ce que** l'emplacement (76 ; 176 ; 276) de la valeur de distance minimale est situé du côté de la droite de liaison (V) duquel l'éloignement de la section de bord latéral (70-2 ; 170-2 ; 270-2) de la droite de liaison (V) est plus grand.

6. Maillon intérieur asymétrique de chaîne de bicyclette (50 ; 150 ; 250) selon l'une quelconque des revendications précédentes, **caractérisé en ce que,** dans la direction de largeur (B) des deux côtés de la droite de liaison (V), à chaque fois à distance de l'emplacement (76 ; 176 ; 276) de la valeur de distance minimale, existe un emplacement (78, 80 ; 178, 180 ; 278, 280) d'une valeur de distance maximale, au niveau duquel la distance présente sur le côté respectif de la droite de liaison (V), à mesurer dans la direction longitudinale (L), entre les deux surfaces planes (62, 64 ; 162, 164 ; 262, 264) est la plus grande, chacune des deux valeurs de distance maximale étant d'un montant plus grand que la valeur de distance minimale, et l'éloignement de l'emplacement (76 ; 176 ; 276) de la valeur de distance minimale des emplacements respectifs (78, 80 ; 178, 180 ; 278, 280) des valeurs de distance maximale étant différent.

7. Maillon intérieur asymétrique de chaîne de bicyclette (50 ; 150) selon l'une quelconque des revendications précédentes, **caractérisé en ce que,** dans une zone longitudinale (66-1, 68-1 ; 166-1, 168-1), située entre les ouvertures de liaison (54, 56 ; 154, 156), du maillon intérieur (50 ; 150), le bord d'au moins une surface plane (62, 64 ; 162, 164), de préférence les bords des deux surfaces planes (62, 64 ; 162, 164), s'étend ou s'étendent de manière rectiligne au moins en sections dans la direction de largeur (B).

8. Maillon intérieur asymétrique de chaîne de bicyclette (150) selon la revendication 7, **caractérisé en ce que,** dans la zone longitudinale (166-1, 168-1), les bords (166, 168) des deux surfaces planes (162, 164) s'étendent de manière rectiligne au moins en sections, les zones de bord de surface rectilignes (166-1, 168-1) s'étendant au moins en sections parallèlement l'une à l'autre.

9. Maillon intérieur asymétrique de chaîne de bicyclette (50) selon la revendication 7 ou 8, **caractérisé en ce que,** dans la zone longitudinale (66-1, 68-1), les bords (66, 68) des deux surfaces planes (62, 64) s'étendent de manière rectiligne au moins en sections, la distance à mesurer dans la direction longitudinale (L) des zones de bord de surface rectilignes (66-1, 68-1) se rétrécissant au moins en sections dans la direction de largeur (B) lors d'un rapprochement croissant de l'emplacement (76) de la valeur de distance minimale, de préférence se rétrécissant en continu.

10. Maillon intérieur asymétrique de chaîne de bicyclette (50 ; 150 ; 250) selon l'une quelconque des revendications précédentes, **caractérisé en ce que,** dans une zone longitudinale (66-1, 66-2, 66-3 ; 166-1, 166-2, 166-3 ; 266-2, 266-3), située entre les ouvertures de liaison (54, 56 ; 154, 156 ; 254, 256), du maillon intérieur (50 ; 150 ; 250), le bord (66, 68 ; 166, 168 ; 266, 268) d'au moins une surface plane (62, 64 ; 162, 164 ; 262, 264), de préférence les bords (66, 68 ; 166, 168 ; 266, 268) des deux surfaces planes (62, 64 ; 162, 164 ; 262, 264), s'étend ou s'étendent sous forme incurvée dans le même sens en continu dans la direction de largeur (B) avec un rayon de courbure qui se modifie le long de la direction de largeur (B).

11. Maillon intérieur asymétrique de chaîne de bicyclette (50 ; 150 ; 250) selon l'une quelconque des revendications précédentes, **caractérisé en ce que** la zone en creux (74 ; 174 ; 274) comprend, dans une zone de largeur (74-3 ; 174-3 ; 274-3) contenant la droite de liaison (V), une zone de surface plane, de préférence orthogonale à la direction d'épaisseur (T).

12. Maillon intérieur asymétrique de chaîne de bicyclette (50 ; 150 ; 250) selon la revendication 11, **caractérisé en ce que** la zone de surface plane (74-3 ; 174-3 ; 274-3) est agencée en décalage dans la direction de largeur (B) par rapport à la droite de liaison (V) vers une zone de bord latéral (70-2 ; 170-2 ; 270-2).

13. Maillon intérieur asymétrique de chaîne de bicyclette (50 ; 150 ; 250) selon l'une quelconque des revendications précédentes, **caractérisé en ce que** les ouvertures de liaison (54, 56 ; 154, 156 ; 254, 256), radialement à l'intérieur des surfaces planes (62, 64 ; 162, 164 ; 262, 264) qui les entourent respectivement, sont entourées par des sections de douille (58, 60 ; 158, 160 ; 258, 260), qui font saillie dans la direction d'épaisseur (T) des maillons intérieurs (50 ; 150 ; 250) au-dessus des surfaces planes (62, 64 ; 162, 164 ; 262, 264) qui les entourent.

14. Maillon intérieur asymétrique de chaîne de bicyclette (50 ; 150 ; 250) selon l'une quelconque des revendications précédentes, **caractérisé en ce que** le côté extérieur, opposé au côté intérieur, du maillon intérieur (50 ; 150 ; 250) comprend une surface extérieure plane (86), qui s'étend entre les ouvertures de liaison (54, 56 ; 154, 156 ; 254, 256) et entoure au moins partiellement, de préférence entièrement, les ouvertures de liaison (54, 56 ; 154, 156 ; 254, 256).

15. Maillon intérieur asymétrique de chaîne de bicyclette (50 ; 150 ; 250) selon la revendication 14, **caractérisé en ce que** le côté extérieur est exempt de protubérances qui font saillie dans la direction d'épaisseur (T) au-dessus de la surface extérieure plane (86) .

16. Maillon intérieur asymétrique de chaîne de bicyclette (50 ; 150 ; 250) selon la revendication 14 ou 15, **caractérisé en ce que** le côté extérieur comprend des creux (88, 90) entourant les ouvertures de liaison (54, 56 ; 154, 156 ; 254, 256), de préférence des creux (88, 90) qui s'amincissent en s'éloignant de la surface extérieure plane (86).

17. Maillon intérieur asymétrique de chaîne de bicyclette (50 ; 150 ; 250) selon l'une quelconque des revendications précédentes, **caractérisé en ce que** le côté intérieur et/ou le côté extérieur, de préférence l'ensemble du maillon intérieur (50 ; 150 ; 250), présente une symétrie spéculaire par rapport à un plan de symétrie (SE) orthogonal à la droite de liaison (V).

18. Maillon extérieur de chaîne de bicyclette (52 ; 152) muni de deux ouvertures de liaison (54a, 56a ; 154a, 156a) formées à distance l'une de l'autre, traversant le maillon extérieur (52 ; 152) dans sa direction d'épaisseur (T), qui sont chacune configurées pour la réception d'un composant de liaison (44), afin de relier le maillon extérieur (52 ; 152) avec un maillon extérieur supplémentaire (52 ; 152) pour la formation d'un élément à maillons extérieurs (40) d'une chaîne de bicyclette (30), une droite de liaison (Va) reliant les axes médians respectifs (M54a, M56a ; M154a, M156a) des ouvertures de liaison (54a, 56a ; 154a, 156a) définissant une direction longitudinale (L) du maillon extérieur (52 ; 152), et une direction orthogonale aussi bien à la direction longitudinale (L) qu'à la direction d'épaisseur (T) étant une direction de largeur (B) du maillon extérieur (52 ; 152), le maillon extérieur (52 ; 152) comprenant, sur son côté intérieur orienté à l'état monté dans une chaîne de bicyclette (30) vers le maillon extérieur supplémentaire (52 ; 152) du même élément à maillons extérieurs (40), deux surfaces planes (62a, 64a ; 162a, 164a) prévues à distance l'une de l'autre dans la direction longitudinale (L) du maillon extérieur (52 ; 152) et séparées par une zone en creux (74a ; 174a) située entre elles dans la direction longitudinale (L), parmi lesquelles chaque surface plane (62a, 64a ; 162a, 164a) entoure une autre des ouvertures de liaison (54a, 56a ; 154a, 156a), la zone en creux (74a ; 174a) étant en retrait par rapport aux surfaces planes (62a, 64a ; 162a, 164a) vers un côté extérieur opposé au côté intérieur du maillon extérieur (52 ; 152), la distance à mesurer dans la direction longitudinale (L) entre les surfaces planes (62a, 64a ; 162a, 164a) étant minimale dans une zone de distance minimale (76a ; 176a), s'étendant dans la direction de largeur (B), contenant la droite de liaison (Va),
la distance entre les surfaces planes (62a, 64a ; 162a, 164a) devenant plus grande en partant de la zone de distance minimale (76a ; 176a) vers chacun des deux bords latéraux (70a-1, 70a-2 ; 170a-1, 170a-2) délimitant le maillon extérieur (52 ; 152) dans la direction de largeur (B) ,
**caractérisé en ce que** la distance dans la direction d'un bord latéral (70a-1, 70a-2) sur un premier côté d'un plan de référence (P) coupant orthogonalement la droite de liaison (Va) en son milieu longitudinal (LMa) croît plus fortement que sur le deuxième côté opposé du plan de référence (P), et la distance dans la direction opposée vers l'autre bord latéral respectif (70a-1, 70a-2) sur le deuxième côté du plan de référence (P) croît plus fortement que sur son premier côté.

19. Maillon extérieur de chaîne de bicyclette (52 ; 152) selon la revendication 18, **caractérisé en ce que,** pour au moins une zone de largeur (BB1, BB2) du maillon extérieur (52 ; 152), qui s'étend en partant de la droite de liaison (Va) parallèlement à la direction de largeur (B) jusqu'au milieu longitudinal (LMa) d'un bord latéral (70a-1, 70a-2 ; 170a-1, 170a-2), de préférence pour les deux zones de largeur (BB1, BB2), une distance à mesurer dans la direction longitudinale (L) entre des bords adjacents à la zone en creux (74a ; 174a) des surfaces planes (62a, 64a ; 162a, 164a) se modifie plus fortement dans les 50 %, de préférence les 30 %, de manière particulièrement préférée les 10 % de la dimension de largeur de la zone de largeur (BB1, BB1) les plus proches du milieu longitudinal (LMa) du bord latéral (70a-1, 70a-2 ; 170a-1, 170a-2) que dans les 30 %, de préférence les 40 %, de manière particulièrement préférée les 50 %, de la dimension de largeur de la zone de largeur (BB1, BB1) les plus proches de la droite de liaison (Va).

20. Maillon extérieur de chaîne de bicyclette (52) selon la revendication 18, **caractérisé en ce que,** pour au moins une surface plane (62a, 64a), de préférence pour les deux surfaces planes (62a, 64a), une zone adjacente à la zone en creux (74a) du bord de la surface plane (62a, 64a) est différemment incurvée dans la direction de largeur (B) sur des côtés différents de la droite de liaison (Va).

21. Maillon extérieur de chaîne de bicyclette (52) selon la revendication 20, **caractérisé en ce que,** pour au moins une surface plane (62a, 64a), de préférence pour les deux surfaces planes (62a, 64a), la zone adjacente à la zone en creux (74a) du bord de la surface plane (62a, 64a) a, dans la direction de largeur (B), sur un côté de la droite de liaison (Va) un parcours incurvé en sections et sur l'autre côté un parcours rectiligne en sections.

22. Maillon extérieur de chaîne de bicyclette (52) selon la revendication 21, **caractérisé en ce que** la section de zone de bord rectiligne en sections est en vis-à-vis dans la direction longitudinale (L) d'une section de zone de bord incurvée de l'autre surface plane respective (62a, 64a), et de préférence inversement.

23. Maillon extérieur de chaîne de bicyclette (52 ; 152) selon l'une quelconque des revendications 18 à 22, **caractérisé en ce que,** dans une première zone de largeur du maillon extérieur (52 ; 152), qui s'étend en partant de la droite de liaison (Va) parallèlement à la direction de largeur (B) jusqu'au milieu longitudinal (LMa) d'un bord latéral (70a-1, 70a-2 ; 170a-1, 170a-2), la distance entre des bords adjacents à la zone en creux (74a ; 174a) des surfaces planes (62a, 64a ; 162a, 164a) est maximale au niveau du milieu longitudinal (LMa) du bord latéral (70a-1, 70a-2 ; 170a-1, 170a-2), et **en ce que**, dans une deuxième zone de largeur du maillon extérieur (52 ; 152), qui s'étend en partant de la droite de liaison (Va) parallèlement à la direction de largeur (B) dans la direction opposée jusqu'au milieu longitudinal (LMa) de l'autre bord latéral (70a-1, 70a-2 ; 170a-1, 170a-2), la distance entre des bords adjacents à la zone en creux (74a ; 174a) des surfaces planes (62a, 64a ; 162a, 164a) est maximale au niveau de l'autre bord latéral (70a-1, 70a-2 ; 170a-1, 170a-2), les distances maximales dans la première et dans la deuxième zone de largeur étant de préférence de montant égal.

24. Maillon extérieur de chaîne de bicyclette (52 ; 152) selon l'une quelconque des revendications 18 à 23, **caractérisé en ce que** chacune des ouvertures de liaison (54a, 56a ; 154a, 156a) est entourée radialement à l'intérieur de la surface plane (62a, 64a ; 162a, 164a) qui l'entoure par une protubérance (55a, 57a ; 155a, 157a) faisant saillie dans la direction d'épaisseur (T) au-dessus de la surface plane respective (62a, 64a ; 162a, 164a), notamment une protubérance (55a, 57a ; 155a, 157a) qui s'amincit en s'éloignant de la surface plane respective (62a, 64a ; 162a, 164a).

25. Maillon extérieur de chaîne de bicyclette (52 ; 152) selon l'une quelconque des revendications 18 à 24, **caractérisé en ce que** le côté intérieur et/ou le côté extérieur, de préférence l'ensemble du maillon extérieur (52 ; 152), présente une symétrie ponctuelle par rapport à un axe de symétrie s'étendant dans la direction d'épaisseur (T), coupant la droite de liaison (Va) en son milieu longitudinal (LMa).

26. Roue à chaîne (28), comprenant une chaîne de bicyclette circonférentielle fermée (30) munie d'éléments à maillons extérieurs et intérieurs (40, 42) successifs alternés dans la direction circonférentielle (D), les éléments à maillons intérieurs (42) étant formés par deux maillons intérieurs asymétriques (50 ; 150 ; 250) selon l'une quelconque des revendications 1 à 17 et/ou les éléments à maillons extérieurs (40) étant formés par deux maillons extérieurs (52 ; 152) selon l'une quelconque des revendications 18 à 25.

27. Roue à chaîne (28) selon la revendication 26, **caractérisée en ce que** l'élément à maillons intérieurs (42) est formé par deux maillons intérieurs asymétriques (50 ; 150 ; 250) selon la revendication 2 ou selon une revendication parmi les revendications 3 à 17 se rapportant à la revendication 2, les sections de bord latéral (70a-2 ; 170a-2 ; 270a-2) présentant la plus grande distance à la droite de liaison (Va) étant agencées radialement à l'extérieur sur l'anneau de chaine (28) .
